# EUROPEAN PATENT SPECIFICATION

(11) **EP 2 070 998 B1**
(45) Date of publication and mention of the grant of the patent: **08.04.2015**
(21) Application number: 08021537.9
(22) Date of filing: 11.12.2008
(51) Int. Cl.: C09D 11/00, C09D 11/10

(54) **Inkjet recording ink composition and inkjet recording method**
Tintenzusammensetzung zur Tintenstrahlaufzeichnung und Tintenstrahlaufzeichnungsverfahren
Composition d'encre d'enregistrement à jet d'encre et procédé d'enregistrement à jet d'encre

(30) Priority: 14.12.2007 JP 2007323011
(43) Date of publication of application: 17.06.2009
(73) Proprietor: Fujifilm Corporation, Tokyo (JP)
(72) Inventor: Nakamura, Ippei, Ashigarakami-gun Kanagawa (JP); Hayata, Yuuichi, Tokyo (JP)
(74) Representative: Hoffmann Eitle

(56) References cited:
- EP-A- 0 685 535
- EP-A- 1 800 884
- EP-A- 1 927 477
- US-A1- 2004 099 170
- US-A1- 2006 158 493

## Description

### Field of the Invention

The present invention relates to an inkjet recording ink composition and an inkjet recording method using the ink composition.

### Description of the Related Art

As an image recording method that forms, based on an image data signal, an image on a recording medium such as paper, there are an electrophotographic method, sublimation type and fusion type thermal transfer methods, and an inkjet method.

Since a process of charging and exposing to form an electrostatic latent image on a photoreceptor drum is necessary in the electrophotographic method, a system therefor becomes complicated, resulting in a problem of higher production cost.

As for the thermal transfer method, although a device is cheap, there are problems in that since an ink ribbon is used, the running cost is high and waste is generated.

On the other hand, in the inkjet method, a cheap device may be used and the ink is jetted only on a necessary image portion to directly form an image on a recording medium. Accordingly, the ink may be used efficiently and the running cost is low. Furthermore, the inkjet recording method is excellent as an image recording method with lower noise.

An ink composition curable by exposure to actinic radiation such as ultraviolet rays (radiation-curable ink composition) which may be used in an inkjet recording ink composition is required to have sufficiently high sensitivity and provide high image quality.

If higher sensitivity of a radiation-curable ink composition is achieved, the radiation-curable ink composition may have high curability with respect to irradiation with actinic radiation, and thus various benefits may be attained including not only a reduction in power consumption and longer lifetime of the device due to a decrease in the load on an actinic radiation generator, but also prevention of a volatilization of uncured low molecular material and prevention of a reduction in the strength of a formed image. The improvement in the strength of a cured film due to higher sensitivity of the radiation-curable ink composition confers high strength and durability on an image portion formed by the ink composition.

For instance, an ink composition containing a combination of different monofunctional and/or multifunctional monomers having functional group(s) has been proposed as a UV-curable ink composition (see, for example, Japanese Patent Application Laid-Open (JP-A) No. 5-214280). Further, a composition containing a multifunctional acrylate has also been proposed as a radiation-curable composition (see, for example, JP-A No. 8-41133). These ink compositions are excellent in curing speed and may form an image without bleeding, but due to use of a multifunctional acrylate as the main component of the curable composition, they have a problem of a reduction in flexibility after curing and a problem of a reduction in adhesiveness (adhesion) to a recording medium attributable to volume shrinkage at curing.

With respect to the adhesiveness of the ultraviolet-curable ink composition to a recording medium, a radiation-curable inkjet ink composition containing an N-vinyl lactam as a component for promoting adhesiveness to a recording medium and flexibility after curing has been disclosed (see, for example, Japanese National Phase Publication No. 2004-514014). However, an N-vinyl lactam such as N-vinyl caprolactam may have problems such as tackiness and leaching after curing, attributable to the poor copolymerizability thereof with a general-purpose radical-polymerizable monomer such as an acrylate, and also may have problems such as deterioration in the storage stability of the ink attributable to the N-vinyl lactam.

EP 1 927 477 A1 constitutes prior art pursuant to Article 54 (3) EPC and is directed to an ink composition for inkjet-recording which comprises (A) a compound having a polymerzable unsaturated bond and a cyclic amine structure in the molecule (B) a compound having a polymerizable unsaturated bond and an alicyclic structure in the molecule, and (C) a radical polymerization initiator. The ink compositions of Examples 2, 3, 8, 9 and 11 ofEP 1 927 477 A1 are explicitly excluded from the scope of protection conferred by the present application by means of the disclaimer in claim 1.

Thus, an ink composition that is excellent in adhesiveness to a recording medium and also in jetting stability when used in an inkjet apparatus, while maintaining excellent curing sensitivity, flexibility in an image portion and image strength, is desired at present, but is still not provided.

### SUMMARY OF THE INVENTION

According to an aspect of the invention, there is provided an inkjet recording ink composition, comprising (A) polymerizable compounds comprising a monofunctional polymerizable monomer and a polyfunctional polymerizable monomer, and (B) a radical polymerization initiator, wherein (A) the polymerizable compounds comprise (A1) a polymerizable compound having, in a molecule thereof, an acryloyl group and an amino group, and a content ratio of the monofunctional polymerizable monomer with respect to the total amount of (A) the polymerizable compounds is from 90% by mass to 99.9% by mass, and a content ratio of the polyfunctional polymerizable monomer with respect to the total amount of (A) the polymerizable compounds is from 0.1 % by mass to 10% by mass.

### DETAILED DESCRIPTION OF THE INVENTION

### [Inkjet recording ink composition]

The inkjet recording ink composition of the invention (hereinafter may be referred to simply as an "ink composition") contains (A) polymerizable compounds and (B) a radical polymerization initiator, wherein (A) the polymerizable compounds contain (A1) a polymerizable compound having, in a molecule thereof, an acryloyl group and an amino group. Further, (A) the polymerizable compounds contain a monofunctional polymerizable monomer having, in a molecule thereof, only one polymerizable unsaturated group and a multifunctional polymerizable monomer having, in a molecule thereof, two or more polymerizable unsaturated groups, wherein the content ratio of the monofunctional polymerizable monomer with respect to the total amount of the polymerizable compounds is 90 to 99.9% by mass, and the content ratio of the multifunctional polymerizable monomer with respect to the total amount of the polymerizable compounds is 0.1 to 10% by mass.

Hereinafter, components contained in the inkjet recording ink composition of the invention will be described in detail respectively.

### [(A) Polymerizable compounds]

The ink composition of the invention contains (A) polymerizable compounds.
(A) The polymerizable compounds are not particularly limited as long as they are compounds having, in the molecule thereof, at least one ethylenically unsaturated bond (polymerizable unsaturated group) which is radical polymerizable.
The unsaturated bond (polymerizable unsaturated group) which is addition polymerizable by radical polymerization is preferably a polymerizable functional group selected from, for example, an acryloyl group, a methacryloyl group, an allyl group, a vinyloxy group and a styryl group, among which an acryloyl group or a methacryloyl group is more preferable and an acryloyl group is still more preferable, from the viewpoint of the curing speed and viscosity of the ink composition.

In the invention, (A) the polymerizable compounds include (A1) a polymerizable compound having, in the molecule thereof, an acryloyl group and an amino group. Hereinafter, (A1) the polymerizable compound having, in the molecule thereof, an acryloyl group and an amino group, which is a characteristic component of the invention, is described.

### <(A1) Polymerizable compound having, in the molecule thereof, an acryloyl group and an amino group>

The inkjet recording ink composition of the invention contains a polymerizable compound having, in the molecule thereof, an acryloyl group and an amino group (hereinafter referred to appropriately as a specific amine compound).
Hereinafter, the compound having, in the molecule thereof, an acryloyl group and an amino group (specific amine compound), which is a characteristic component in the invention, is described in detail.

The acryloyl group which the specific amine compound has in its molecule is is used from the viewpoint of the curing speed and viscosity of the ink composition.

The number of polymerizable unsaturated bonds in one molecule of the specific amine compound is preferably 1 to 6, more preferably 1 to 4, still more preferably 1 to 2, further more preferably 1, from the viewpoint of the viscosity of the ink composition, the jetting stability thereof when used in an inkjet apparatus, and physical properties of a cured film.

The amino group in the molecule of the specific amine compound is preferably a tertiary amino group from the viewpoint of the viscosity and stability of the ink composition. From the viewpoint of curing speed, at least one of carbon atoms linked to the nitrogen atom constituting the tertiary amino group is preferably bonded to a hydrogen atom.

The number of amino groups which the specific amine compound has in its molecule is preferably 1 to 2, more preferably 1, from the viewpoint of the inkjet suitability of the ink composition and physical properties of film after curing.

Preferable examples of the specific amine compound include compounds represented by the following formula (I):

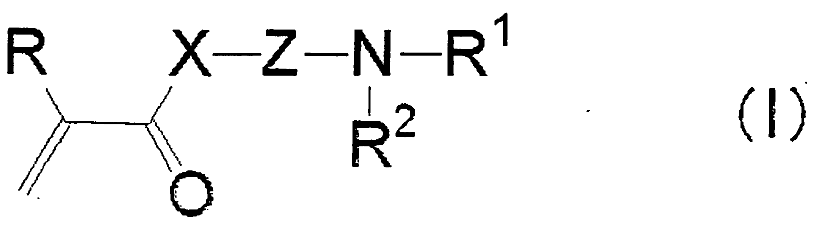

In the formula (I), R represents a hydrogen atom from the viewpoint of reactivity and the flexibility of a polymer formed by polymerization reaction.

X represents an oxygen atom to improve mobility around a polymerizable site.

Z represents a divalent organic group or a single bond. The divalent organic group is preferably a hydrocarbon group having 1 to 20 carbon atoms, more preferably a hydrocarbon group having 2 to 12 carbon atoms, even more preferably a hydrocarbon group having 2 to 8 carbon atoms. Among them, an alkylene group having 2 to 6 carbon atoms, such as an ethylene or propylene group, is preferable.

Preferable examples of the divalent organic group represented by Z are as follows:

### <Preferable specific examples of Z>

* -(CH₂)ₙ-*

* -CH₂-CH₂-O-CO-Z'-*

In the above specific examples, n is an integer of 2 to 12.
In the above specific examples, Z' represents a divalent organic group selected from the following groups.
In the above chemical formulae, * represents a binding site.

* -C₆H₄-*

* -C₆H₄-(CH₂)ₙ-*

* -(CH₂)ₙ-C₆H₄-*

* -(CH₂)ₙO-C₆H₄-*

* -CH₂-CH₂-*

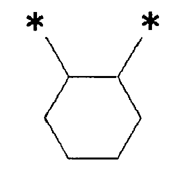

In the above chemical formulae, * represents a binding site, and n represents an integer of 1 to 12.
R¹ and R² each independently represent an alkyl group having 1 to 8 carbon atoms and is more preferably an alkyl group having 1 to 6 carbon atoms, still more preferably an alkyl group having 1 to 4 carbon atoms, and further still more preferably an ethyl group and an isopropyl group. R¹ and R² may be bonded to each other to form a ring structure, or R¹ and Z, or R² and Z, may be bonded to each other to form a ring structure. When R¹ and R², R¹ and Z, or R² and Z are bonded to each other to form a ring, the ring is preferably a 5- or 6-membered ring.

The bond through which R¹ and R², R¹ and Z, or R² and Z are bonded to each other to form a ring structure may be either a single bond or a double bond, among which a single bond is preferable.
When the bond is a single bond, the resulting cyclic amine structure is an alicyclic structure, whereby an effect of improving the curing speed, particularly an effect of inhibiting the polymerization inhibition by oxygen upon curing in air, is made significant, thereby conferring high curability on the ink composition of the invention containing mainly monofunctional monomers.

The number of nitrogen atoms contained in the ring structure is preferably 1 to 3, more preferably 1 to 2, and a ring structure having therein only 1 basic nitrogen atom is particularly preferable.

The ring that forms the cyclic amine structure may have a substituent if the substituent may be introduced into the ring. The substituent is preferably a relatively short alkyl group having about 1 to 4 carbon atoms, more preferably a methyl or ethyl group, still more preferably a methyl group.

The atoms that form the ring in the cyclic amine structure may include heteroatoms such as oxygen or sulfur atoms besides a nitrogen atom.

The cyclic amine structure is particularly preferably a pyrrolidine ring, a piperidine ring or a morpholine ring, and further preferably a piperidine ring having substituents, represented by the following formula (II):

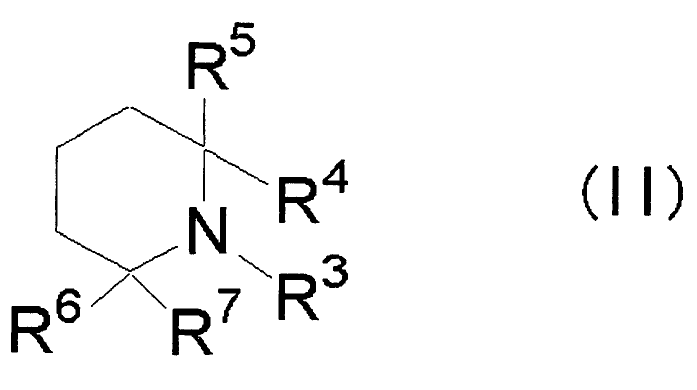

In the formula (II), R³ represents an alkyl group or a substituted alkyl group, preferably an alkyl group having no substituent.
The alkyl group is preferably an alkyl group having 1 to 20 carbon atoms, more preferably an alkyl group having 1 to 12 carbon atoms, still more preferably an alkyl group having 1 to 4 carbon atoms.

Preferable examples of the alkyl group include a methyl group, an ethyl group, an n-butyl group, an n-hexyl group and an n-nonyl group, among which a methyl group, an ethyl group and a butyl group are more preferable, and a methyl group is still more preferable.
The alkyl group preferably has hydrogen atoms on a carbon atom adjacent to the nitrogen atom, and the number of the hydrogen atoms is preferably 2 or more.

When R³ is a substituted alkyl group, a substituent that may be introduced into the alkyl group is preferably an alkyl group, an alkoxy group, an aryl group, an aryloxy group, an acyl group, an amino group, a hydroxyl group, a cyano group, a nitro group or a halogen atom.

R⁴ to R⁷ each independently represent a methyl or ethyl group, preferably a methyl group, and more preferably all of R⁴ to R⁷ are methyl groups.

In (A1) the specific amine compound in the invention, the cyclic amine structure is linked via a linking group to the acryloyl group, and the site at which the cyclic amine structure is linked to the acryloyl group may be any site in the cyclic amine structure in the general formula (II), other than the sites at which R⁴ to R⁷ are present.

Specific examples (A-1) to (A-29) of (A1) the specific amine compound are shown below, but (A1) the specific amine compound in the invention is not limited thereto. 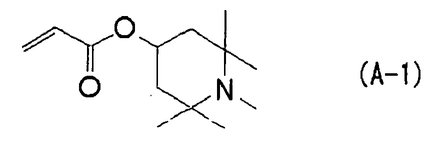 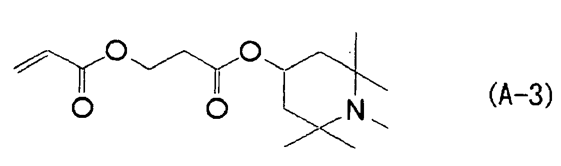 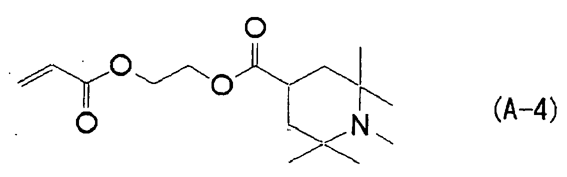 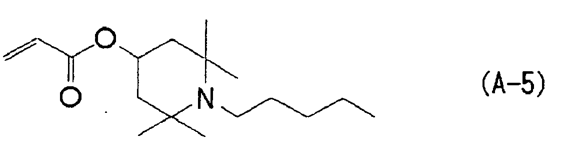 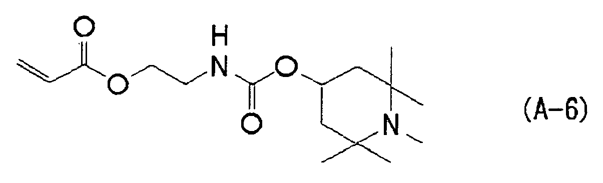 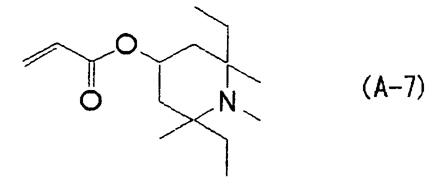 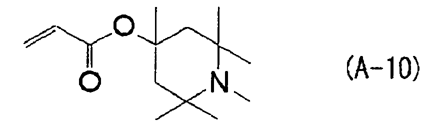 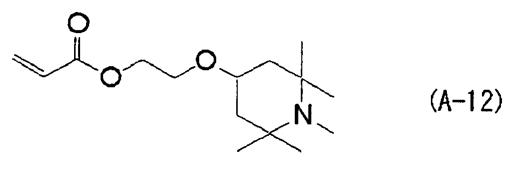 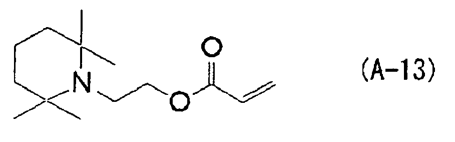 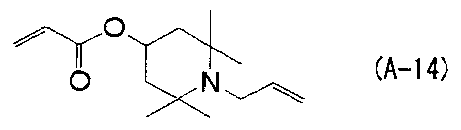 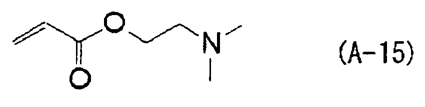 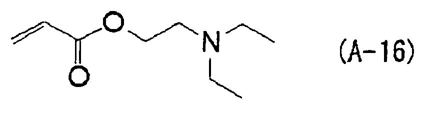 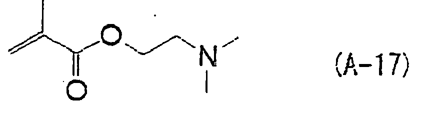 (reference; not in accordance with the invention)

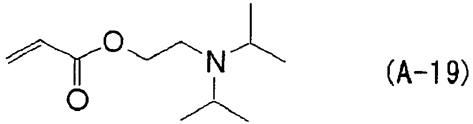

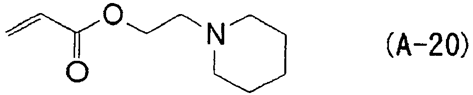

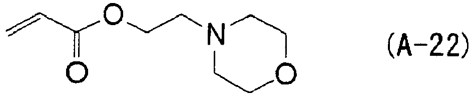

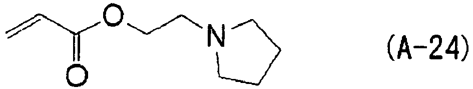

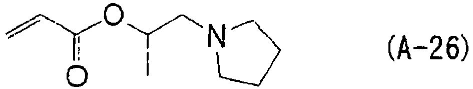

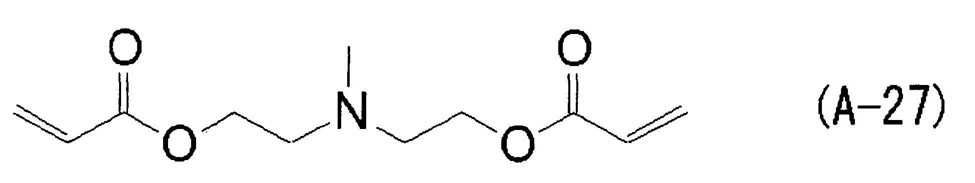

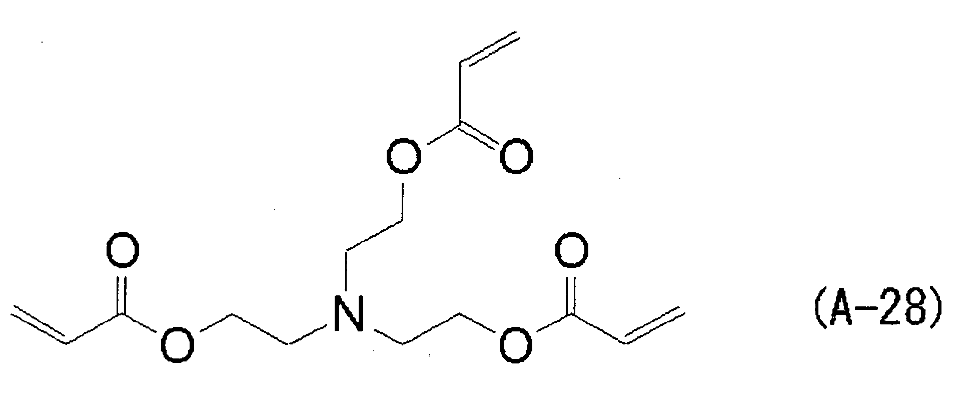

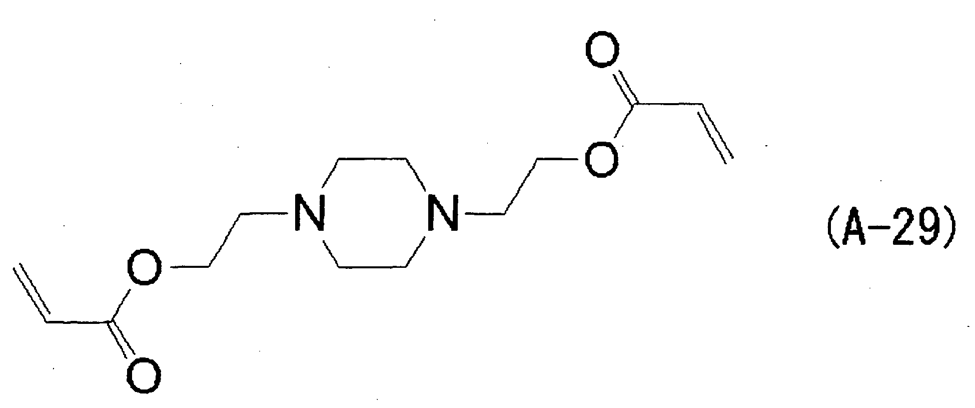

The preferable specific amine compounds in the invention have been shown above, but the invention is not limited to those mentioned above, and the specific amine compound may be any amine compound having, in the molecule thereof, at least one polymerizable unsaturated bond and at least one amino group.

Among the specific examples shown above, the exemplary compounds (A-1), (A-3), (A-12), (A-19), (A-20) and (A-24) are more preferable, and the exemplary compounds (A-1) and (A-19) are particularly preferable.

The specific amine compound in the invention may be produced by known synthesis methods such as those described in Makromolekulare Chemie, Vol. 181, No. 3, pp. 595-634 (1980), Journal of Applied Polymer Science, Vol. 69, No. 13, pp. 2649-2656 (1998), Journal of Applied Polymer Science, Vol. 75, No. 9, pp. 1103-1114 (2000), Polymers for Advanced Technologies, Vol. 13, pp. 247-253 (2002), and JP-A No. 3-251569, or may be commercially available chemical products such as Fancryl FA-711MM (manufactured by Hitachi Chemical Co., Ltd.). All patents, patent-related publications, and non-patent literature cited in this specification are hereby expressly incorporated by reference herein.

The content of the specific amine compound in the ink composition of the invention is preferably in the range of 0.1 to 25% by mass, more preferably in the range of 1 to 20% by mass, still more preferably 2 to 15% by mass, based on the total mass of the ink composition, from the viewpoint of curing speed, the adhesion between a cured film and a recording medium, and the inkjet suitability of the ink composition.
The specific amine compounds may be used singly or as a combination of two or more thereof.

(A) The polymerizable compounds in the ink composition of the invention may include a general polymerizable compound in addition to (A1) the specific amine compound described above. The polymerizable compound may be a monofunctional polymerizable monomer having, in the molecule thereof, only one polymerizable unsaturated group or a multifunctional polymerizable monomer having, in the molecule thereof, two or more polymerizable unsaturated groups. However, from the viewpoint of the viscosity of the ink composition, strength and flexibility after curing, and adhesion property, a combination of a compound having, in the molecule thereof, only one polymerizable unsaturated group and a compound having, in the molecule thereof, two or more polymerizable unsaturated groups is preferably used.

### <(A2) Specific examples of monofunctional monomer>

Specific examples of the monofunctional monomer that is a polymerizable compound usable in the invention and other than (A1) the specific amine compound include, but are not limited to, 2-phenoxyethyl acrylate, tetrahydrofurfuryl acrylate, benzyl acrylate, methylphenoxyethyl acrylate, 4-t-butylcyclohexyl acrylate, caprolactone-modified tetrahydrofurfuryl acrylate, tribromophenyl acrylate, ethoxylated tribromophenyl acrylate, a 2-phenoxyethyl acrylate monomer having ethylene oxide and/or propylene oxide added thereto, phenoxydiethylene glycol acrylate, vinyl caprolactam, 2-hydroxy-3-phenoxypropyl acrylate, 2-hydroxyethyl acrylate, 2-hydroxypropyl acrylate, 4-hydroxybutyl acrylate, isooctyl acrylate, methoxytriethylene glycol acrylate, 2-ethoxyethyl acrylate, 3-methoxybutyl acrylate, ethoxyethoxyethyl acrylate, butoxyethyl acrylate, ethoxydiethylene glycol acrylate, methoxydipropylene glycol acrylate, dipropylene glycol acrylate, β-carboxyethyl acrylate, ethyldiglycol acrylate, trimethylol propane formal monoacrylate, isoamyl acrylate, isobornyl acrylate, dicyclopentanyl acrylate, ethoxylated succinic acrylate, trifluoroethyl acrylate, and ω-carboxypolycaprolactone monoacrylate, among which 2-phenoxyethyl acrylate and isobornyl acrylate are preferable.

### <Specific examples of multifunctional monomer>

The multifunctional monomer that may be used as the polymerizable compound is preferably one having, in the molecule thereof, 2 to 6 polymerizable unsaturated groups, more preferably 2 to 4 polymerizable unsaturated groups, even more preferably 2 polymerizable unsaturated groups.
Specific examples of the multifunctional polymerizable monomer, other than (A1) the specific amine compound, include, but are not limited to, dimethylol-tricyclodecane diacrylate, propoxylated bisphenol A di(meth)acrylate, ethoxylated bisphenol A di(meth)acrylate, cyclohexanedimethanol di(meth)acrylate, dimethylol dicyclopentane diacrylate, ethoxylated isocyanuric acid triacrylate, tri(2-hydroxyethyl isocyanurate) triacrylate, tri(meth)allyl isocyanurate, ethylene glycol di(meth)acrylate, diethylene glycol di(meth)acrylate, polyethylene glycol di(meth)acrylate, 1,6-hexanediol di(meth)acrylate, ethoxylated 1,6-hexanediol diacrylate, neopentyl glycol di(meth)acrylate, polypropylene glycol diacrylate, 1,9-nonanediol diacrylate, tetraethylene glycol diacrylate, 2-n-butyl-2-ethyl-1,3-propanediol diacrylate, neopentylglycol hydroxypivalate diacrylate, trimethylolpropane triacrylate, trimethylolpropane hydroxypivalate triacrylate, ethoxylated phosphoric acid triacrylate, ethoxylated tripropylene glycol diacrylate, neopentyl glycol-modified trimethylolpropane diacrylate, stearic acid-modified pentaerythritol diacrylate, pentaerythritol triacrylate, tetramethylolpropane triacrylate, tetramethylolmethane triacrylate, pentaerythritol tetraacrylate, caprolactone-modified trimethylolpropane triacrylate, propoxylate glyceryl triacrylate, tetramethylolmethane tetraacrylate, pentaerythritol tetraacrylate, ditrimethylolpropene tetraacrylate, ethoxylated pentaerythritol tetraacrylate, dipentaerythritol hexaacrylate, caprolactone-modified dipentaerythritol hexaacrylate, dipentaerythritol hydroxy pentaacrylate, ethoxylated neopentyl glycol di(meth)acrylate, propoxylated neopentyl glycol di(meth)acrylate, tripropylene glycol di(meth)acrylate, ethoxylated trimethylolpropane triacrylate, propoxylated trimethylolpropane triacrylate, dicyclopentenyl acrylate, dicyclopentenyloxyethyl acrylate, undecylenoxy acrylate, diethylene glycol divinyl ether, and tripropylene glycol divinyl ether. These monofunctional and multifunctional monomers may be used singly or as a combination of two or more thereof if necessary.

### <Other polymerizable compounds>

Preferably, the ink composition of the invention contains polymerizable compounds other than (A1) the specific amine compound, the specific examples of the monofunctional monomer and the specific examples of the multifunctional monomer described above. Such polymerizable compounds may be radical polymerizable compounds. Such polymerizable compounds may be selected appropriately depending on intended properties or the radical polymerization initiator.

The total content of the polymerizable compounds (that is, the total content of the specific amine compound and polymerizable compounds other than the specific amine compound) in the ink composition of the invention is preferably in the range of 45 to 95% by mass, more preferably in the range of 50 to 90% by mass, based on the total mass of the ink composition of the invention.

In the inkjet recording ink composition of the invention, the content of the specific amine compound is preferably in the range of 1 to 60% by mass, more preferably in the range of 2 to 50% by mass, still more preferably in the range of 5 to 40% by mass, based on the total content of the polymerizable compounds (that is, the total content of the specific amine compound and polymerizable compounds other than the specific amine compound) contained in the ink composition.

Hereinafter, the other polymerizable compounds that may be used in the invention is described in more detail.
The radical polymerizable compound is a compound having a radical-polymerizable ethylenically unsaturated bond, and may be any compound as long as it has at least one radical-polymerizable ethylenically unsaturated bond in the molecule thereof; examples thereof include those having a chemical form such as a monomer, an oligomer, or a polymer. One type of radical polymerizable compound may be used, or two or more types thereof may be used in combination at any arbitrary ratio in order to improve intended properties. It is more preferable to use two or more types of polymerizable compounds in combination in terms of controlling performance such as reactivity or physical properties.

Examples of the polymerizable compound having a radical-polymerizable ethylenically unsaturated bond include unsaturated carboxylic acids such as acrylic acid, methacrylic acid, itaconic acid, crotonoic acid, isocrotonoic acid, and maleic acid, and salts thereof, anhydrides having an ethylenically unsaturated group, acrylonitrile, styrene, and various types of radical polymerizable compounds such as unsaturated polyesters, unsaturated polyethers, unsaturated polyamides, and unsaturated urethanes.

More specifically, radical-polymerizable or crosslinking monomers, oligomers, and polymers which are commercial available or known in the art may be used, and examples thereof include those described in "Kakyozai Handobukku" (Crosslinking Agent Handbook), Ed. S. Yamashita (Taiseisha, 1981); "UV-EB Koka Handobukku (Genryo Hen)" (UV-EB Curing Handbook (Starting Materials), Ed. K. Kato (Kobunshi Kankoukai, 1985); "UV-EB Koka Gijutsu no Oyo to Shijyo" (Application and Market of UV-EB Curing Technology", p. 79, Ed. Rad Tech (CMC, 1989); and E. Takiyama "Poriesuteru Jushi Handobukku" (Polyester Resin Handbook), (The Nikkan Kogyo Shimbun Ltd., 1988).

Among these acrylates and methacrylates, the other polymerizable compounds are preferably acrylates of alcohols having an ether oxygen atom, such as tetrahydrofurfuryl acrylate or 2-phenoxyethyl acrylate, from the viewpoint of curability and physical property of film after curing. From the same reason, acrylates of alcohols having an alicyclic structure are also preferable, and specific examples thereof include acrylates having a bicyclocyclic or tricyclocyclic structure, such as isobornyl acrylate, dicyclopentenyl acrylate, dicyclopentenyloxyethyl acrylate, or dicyclopentanyl acrylate, among which dicyclopetenyl acrylate or dicyclopentenyloxyethyl acrylate having a double bond in its alicyclic structure is particularly preferable.

As the radical polymerizable compound, photo-curable polymerizable compounds that are used in photo-polymerizable compositions described in, for instance, JP-A No. 7-159983, Japanese Patent Application Publication (JP-B) No. 7-31399, JP-A Nos. 8-224982, 10-863 and 9-134011, and Japanese National Phase Publication No. 2004-514014 are known, and these may be applied as well in the inkjet recording ink composition of the invention.

As the radical polymerizable compound, vinyl ether compounds are also preferably used. Examples of preferably usable vinyl ether compounds include di- or tri-vinyl ether compounds such as ethylene glycol divinyl ether, ethylene glycol monovinyl ether, diethylene glycol divinyl ether, triethylene glycol monovinyl ether, triethylene glycol divinyl ether, propylene glycol divinyl ether, dipropylene glycol divinyl ether, butane diol divinyl ether, hexane diol divinyl ether, cyclohexane dimethanol divinyl ether, hydroxyethyl monovinyl ether, hydroxynonyl monovinyl ether and trimethylolpropane trivinyl ether; and monovinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexane dimethanol monovinyl ether, n-propyl vinyl ether, isopropyl vinyl ether, isopropenyl ether-O-propylene carbonate, dodecylvinyl ether, diethylene glycol monovinyl ether and octadecyl vinyl ether.
As the vinyl ether compound, commercial products such as RAPI-CURE DVE-3 and RAPI-CURE DVE-2 (both of which are manufactured by ISP Europe Corp.) may also be used.

Among these vinyl ether compounds, di- or tri-vinyl ether compounds, and in particular divinyl ether compounds, are preferred from the viewpoint of curability, adhesiveness and surface hardness. The vinyl ether compounds may be used singly or in a suitable combination of two or more thereof.

As the other polymerizable compounds, (meth)acrylates (hereinafter referred to appropriately as acrylate compounds) such as (meth)acrylate monomers or prepolymers, epoxy monomers or prepolymers and urethanic monomers or prepolymers may be used.

Among polymerizable compounds used in UV-curable ink, acrylate compounds are preferable because they give less dermal irritancy and less sensitization (irritability), and stable ink j ettability with relatively low viscosity, and are excellent in polymerization sensitivity and in adhesiveness to a recording medium.

The monomers enumerated herein as the other polymerizable compounds, although having a low molecular weight, show less sensitizing property, high reactivity and low viscosity, and are excellent in adhesiveness to a recording medium.

In order to further improve the sensitivity, lower the bleeding and improve the adhesiveness to the recording medium, a monoacrylate and a multifunctional acrylate monomer or oligomer having a molecular weight of 400 or more, preferably 500 or more, are preferably used in combination.

Particularly, the ink composition used in recording on a flexible recording medium such as a PET film or a PP film may contain one type of compound selected from the specific amine compounds, one type of monomer selected from the monofunctional monomers and one type of monomer selected from the multifunctional monomers, thus imparting flexibility to the film, improving the adhesiveness, increasing film strength, and conferring flexibility on the film after curing.

From the viewpoint of maintaining safety, further improving sensitivity, lowering bleeding and improving adhesiveness to the recording medium, it is most preferable that at least three types of polymerizing compounds that are a monofunctional monomer, a bifunctional monomer and a tri (or more ) functional monomer are used in combination.

As the monoacrylate, stearyl acrylate, isoamyl acrylate, isomyristyl acrylate and isostearyl acrylate are preferably used from the viewpoint of high sensitivity, low contractile property to inhibit curling, prevention of bleeding, less odor of printed matter, and reduction in costs for an irradiation device therefor.

As the oligomer that may be used in combination with the monoacrylate, epoxy acrylate oligomers and urethane acrylate oligomers are particularly preferable.
The methacrylate is lower in skin irritancy than the acrylate.

The polymerizable compounds in the ink composition of the invention preferably include a monofunctional monomer and a multifunctional monomer at the following ratio, from the viewpoint of the balance between curing speed and adhesiveness to a substrate, flexibility after curing, and the inkjet suitability of the ink composition. The polymerizable compounds refer to the total amount of the specific amine compound and polymerizable compounds other than the specific amine compound.

In the ink composition of the invention, the content ratio of the monofunctional monomer is 90 to 99.9% by mass and the content ratio of the multifunctional monomer is 0.1 to 10% by mass; more preferably the content ratio of the monofunctional monomer is 95 to 99.9% by mass and the content ratio of the multifunctional monomer is 0.1 to 5% by mass; still more preferably the content ratio of the monofunctional monomer is 97 to 99.5% by mass and the content ratio of the multifunctional monomer is 0.5 to 3% by mass, with respect to the total amount of the polymerizable compounds contained in the ink composition. Within the above range, a film obtained after curing may have excellent characteristics.

The monofunctional monomer, when the specific amine compound is a monofunctional monomer, refers to the total amount of the specific amine compound and monofunctional monomers other than the specific amine compound.
The multifunctional monomer, when the specific amine compound is a multifunctional monomer, refers to the total amount of the specific amine compound and multifunctional monomers other than the specific amine compound.

### [Radical polymerization initiator]

The ink composition of the invention contains a radical polymerization initiator. As the polymerization initiator, known radical polymerization initiators may be appropriately selected depending on the type of the polymerizable compounds and the intended use of the ink composition.

The radical polymerization initiator used in the ink composition of the invention is a compound that forms a polymerization initiating species by absorbing external energy. The external energy used for initiating polymerization may be roughly divided into heat and radiation, and a thermal polymerization initiator and a photopolymerization initiator are used respectively. Examples of the radiation include γ rays, β rays, an electron beam, UV rays, visible light, and IR rays. As a thermal polymerization initiator and a photopolymerization initiator, known compounds may be used.

Examples of the radical polymerization initiators that may be preferably used in the invention include (a) aromatic ketones, (b) an acylphosphine oxide compound, (c) an aromatic onium salt compound, (d) an organic peroxide, (e) a thio compound, (f) a hexaarylbiimidazole compound, (g) a ketooxime ester compound, (h) a borate compound, (i) an azinium compound, (j) a metallocene compound, (k) an active ester compound, (l) a compound having a carbon-halogen bond, and (m) an alkylamine compound.

The radical polymerization initiators may be used singly or in combination thereof. From the viewpoint of the effect, a combination of two or more types of radical polymerization initiators is preferably used.

Specific examples of the radical polymerization initiator used in the invention include benzoin isobutyl ether, 2,4-diethylthioxanthone, 2-isopropylthioxanthone, benzyl, 2,4,6-trimethyl benzoyl diphenyl phosphine oxide, 2-benzyl-2-dimethylamino-1-(4-morpholinophenyl)-butan-1-one, bis(2,4,6-dimethoxybenzoyl)-2,4,4-trimethylpentylphosphine oxide, 1,2-octane dione, and 1-(4-(phenylthio)-2,2-(O-benzoyloxime)), etc. Other molecule cleavage-type polymerization initiators that may be used include 1-hydroxycyclohexyl phenyl ketone, benzoin ethyl ether, benzyl dimethyl ketal, 2-hydroxy-2-methyl-1-phenylpropan-1-one, 1-(4-isopropylphenyl)-2-hydroxy-2-methylpropan-1-one, and 2-methyl-1-(4-methylthiophenyl)-2-morpholinopropan-1-one, etc. Hydrogen abstraction-type photopolymerization initiators that may be used include benzophenone, 4-phenylbenzophenone, isophthalphenone, 4-benzoyl-4'-methyl-diphenyl sulfide, etc.

The amount of the radical polymerization initiator in the invention is preferably in the range of 1 to 30% by mass, more preferably in the range of 2 to 20% by mass, still more preferably in the range of 2 to 15% by mass, based on the total amount of the polymerizable compounds.

When the radical polymerization initiator is used in combination with a sensitizing dye described later, the content ratio of the radical polymerization initiator : the sensitizing dye, in terms of mass ratio, is preferably in the range of 200 : 1 to 1 : 200, more preferably in the range of 50 : 1 to 1 : 50, still more preferably in the range of 20 : 1 to 1 : 5.

As to the selection of the polymerization initiator and polymerizable compounds in the invention, in addition to the combination of the radical polymerizable compounds and the radical polymerization initiator, a cationic polymerizable compound and a cationic polymerization initiator may be used to prepare a radical/cationic hybrid type curable ink, for various purposes (for instance, for inhibiting sensitivity from deteriorating due to a shielding effect of a colorant used in the ink composition).

In the ink composition of the invention, not only the essential components described above but also other components may be used in combination for the purpose of improving physical properties, as long as the effect of the invention is not hindered. Hereinafter, such optional components are described in detail.

### [Colorant]

The ink composition of the invention may contain a colorant. By containing a colorant, a colored image may be formed.

The colorant that may be used in the invention is not particularly limited and may be selected from arbitrary known colorants such as a pigment, an oil-soluble dye, a water-soluble dye and a disperse dye. Among them, a pigment and an oil-soluble dye excellent in weather resistance and rich in color reproduction are preferable, and a pigment is particularly preferable.

The colorant that may be suitably used in the ink composition of the invention is selected preferably from compounds not functioning as polymerization inhibitors in polymerization reaction (curing reaction), from the viewpoint of preventing deterioration in the sensitivity of curing reaction by actinic radiations.

### - Pigment -

The pigment that may be used in the invention is not particularly limited. For example, organic and inorganic pigments having the numbers described below in the Color Index may be used.

Examples of red or magenta pigments include Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, or 257, Pigment Violet 3, 19, 23, 29, 30, 37, 50, or 88, and Pigment Orange 13, 16, 20, or 36.
Examples of blue or cyan pigments include Pigment Blue 1, 15, 15:1, 15:2, 15:3, 15:4, 15:6, 16, 17-1, 22, 27, 28, 29, 36, or 60.
Examples of green pigment include Pigment Green 7, 26, 36, or 50.
Examples of yellow pigments include Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, or 193.
Examples of black pigments include Pigment Black 7, 28, or 26.
Examples of white pigments include Pigment White 6, 18, or 21.
These pigments may be selected appropriately depending on the object.

### - Oil-soluble dye -

The oil-soluble dye that may be used in the invention is explained below.
The oil-soluble dye means a dye that is substantially insoluble in water. Specifically, the solubility in water at 25°C (the mass of dye that may be dissolved in 100 g of water) is 1 g or less, preferably 0.5 g or less, more preferably 0.1 g or less. Therefore, the oil-soluble dye means a so-called water-insoluble pigment or an oil-soluble dye, among which the oil-soluble dye is preferable.

Among the oil-soluble dyes, yellow dyes may be arbitrary ones. Examples thereof include aryl or heteryl azo dyes having a coupling component such as a phenol, a naphthol, an aniline, a pyrazolone, a pyridone, or an open-chain active methylene compound; azomethine dyes having a coupling component such as an open-chain active methylene compound; methine dyes such as benzylidene dyes and monomethineoxonol dyes; quinone dyes such as naphthoquinone dyes and anthraquinone dyes; and other dye species such as quinophthalone dyes, nitro/nitroso dyes, acridine dyes, and acridinone dyes.

Among the oil-soluble dyes, magenta dyes may be arbitrary ones. Examples thereof include aryl or heteryl azo dyes having a coupling component such as a phenol, a naphthol, or an aniline; azomethine dyes having a coupling component such as a pyrazolone or a pyrazolotriazole; methine dyes such as arylidene dyes, styryl dyes, merocyanine dyes, and oxonol dyes; carbonium dyes such as diphenylmethane dyes, triphenylmethane dyes, and xanthene dyes; quinone dyes such as naphthoquinones, anthraquinones, or anthrapyridones; and condensed polycyclic dyes such as dioxazine dyes.

Among the oil-soluble dyes, cyan dyes may be any arbitrary ones. Examples thereof include indoaniline dyes, indophenol dyes, and azomethine dyes having a coupling component such as a pyrrolotriazole; polymethine dyes such as cyanine dyes, oxonol dyes, and merocyanine dyes; carbonium dyes such as diphenylmethane dyes, triphenylmethane dyes, and xanthene dyes; phthalocyanine dyes; anthraquinone dyes; aryl or heteryl azo dyes having a coupling component such as a phenol, a naphthol, or an aniline; and indigo/thioindigo dyes.

The above-mentioned dyes may be dyes that exhibit respective colors of yellow, magenta and cyan, only after a part of their chromophore (chromogenic atomic group) dissociates. In this case, the counter cation may be an inorganic cation such as an alkali metal or ammonium, may be an organic cation such as pyridinium or a quaternary ammonium salt, or may be a polymer cation having the above cation in the structure.

Although not limited to the following, preferred specific examples thereof include C.I. Solvent Black 3, 7, 27, 29, and 34; C.I. Solvent Yellow 14, 16, 19, 29, 30, 56, 82, 93, and 162; C.I. Solvent Red 1, 3, 8, 18, 24, 27, 43, 49, 51, 72, 73, 109, 122, 132, and 218; C.I. Solvent Violet 3; C.I. Solvent Blue 2, 11, 25, 35, 38, 67, and 70; C.I. Solvent Green 3 and 7; and C.I. Solvent Orange 2.
Particularly preferred examples thereof include Nubian Black PC-0850, Oil Black HBB, Oil Yellow 129, Oil Yellow 105, Oil Pink 312, Oil Red 5B, Oil Scarlet 308, Vali Fast Blue 2606, Oil Blue BOS (manufactured by Orient Chemical Industries, Ltd.), Aizen Spilon Blue GNH (manufactured by Hodogaya Chemical Co., Ltd.), Neopen Yellow 075, Neopen Magenta SE1378, Neopen Blue 808, Neopen Blue FF4012, and Neopen Cyan FF4238 (manufactured by BASF).

### - Disperse dye -

In the invention, a disperse dye may be used as well in such a range that it may be dissolved in a water-immiscible organic solvent. The disperse dye generally may be a water-soluble dye. In the invention, however, the disperse dye is preferably used in such a range that it may be dissolved in a water-immiscible organic solvent.
Preferable specific examples of the disperse dyes include C.I. Disperse Yellow 5, 42, 54, 64, 79, 82, 83, 93, 99, 100, 119, 122, 124, 126, 160, 184:1, 186, 198, 199, 201, 204, 224 and 237; C.I. Disperse Orange 13, 29, 31:1, 33, 49, 54, 55, 66, 73, 118, 119 and 163; C.I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356 and 362; C.I. Disperse Violet 33; C.I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365 and 368; and C.I. Disperse Green 6:1 and 9.

The colorant after addition to the ink composition of the invention is preferably suitably dispersed in the ink. When the colorant is dispersed, various kinds of dispersers such as a ball mill, sand mill, attritor, roll mill, agitator, Henschel mixer, colloid mill, supersonic homogenizer, pearl mill, wet jet mill, and paint shaker may be used.

When the colorant is dispersed, a dispersant may be added. The dispersant is not particularly restricted in the kind. However, a polymer dispersant may be preferably used. As the polymer dispersant, for instance, SOLSPERSE series (trade name, manufactured by Noveon) may be cited. As a dispersion aid, a synergist corresponding to each of the pigments may be used. In the invention, the dispersant and dispersing aid are preferably added in an amount in the range of 1 to 50 parts by mass based on 100 parts by mass of the colorant.

The colorant may be directly added and blended together with respective components at the preparation of the ink composition of the invention. However, in order to improve the dispersibility, it may be added in advance to a dispersing medium such as a solvent or a polymerizable compound to uniformly disperse or dissolve it, followed by blending with the other components.

In the invention, in order to avoid problems of the deterioration of the solvent resistance when the solvent remains in the cured image and the VOC (Volatile Organic Compound) of the remaining solvent, the colorant is preferably added in advance to any one of the polymerizable compounds or a mixture thereof, followed by blending with the other components.
From the viewpoint of dispersion suitability alone, the polymerizable compound used for the addition of the colorant is selected preferably from monomers with low viscosity.

The colorants may be appropriately selected and used singly or in a combination thereof, depending on the intended use of the ink composition.

When a colorant such as a pigment that remains as solid in the ink composition of the invention is used, it is preferable that the colorant, dispersant and dispersion medium are selected, and dispersion conditions and filtering conditions are determined such that the average particle diameter of colorant particles is preferably in the range of 0.005 to 0.5 µm, more preferably in the range of 0.01 to 0.45 µm, still more preferably in the range of 0.015 to 0.4 µm. When the particle diameter is thus adjusted, a head nozzle may be inhibited from clogging, and the storage stability of ink, the transparency and the curing sensitivity of ink may be maintained.

The content of the colorant in the ink composition of the invention is appropriately selected depending on the intended use of the ink composition. However, when the physical properties and coloring property of the ink are considered, the content of the colorant with respect to the total mass of the ink composition is generally preferably in the range of 0.5 to 10% by mass, more preferably in the range of 1 to 8% mass.

When the ink composition of the invention is a white ink composition containing a white pigment such as titanium oxide as a colorant, the content of the colorant is preferably 5 to 30% by mass, more preferably 10 to 25% by mass, based on the total mass of the ink composition, in order to secure opacifying properties.

### [Sensitizing dye]

In the ink composition of the invention, a sensitizing dye may be added in order to promote the decomposition of the radical polymerization initiator by actinic ray irradiation. The sensitizing dye absorbs a particular actinic radiation to be in an electronically excited state. The electronically excited sensitizing dye comes into contact with a polymerization initiator to generate actions such as electron transfer, energy transfer and heat generation, thereby promoting a chemical change of the polymerization initiator, that is, decomposition and generation of radicals, acids or bases.

The sensitizing dye may be selected according to the wavelength of the actinic radiation that causes a radical polymerization initiator used in the ink composition to generate an active species. However, if considering that the sensitizing dye is used in a curing reaction of a general ink composition, preferable examples of the sensitizing dyes may belong to those compounds that are shown below and have an absorption wavelength in the range of 350 to 450 nm.

Examples thereof include polynuclear aromatic compounds (for instance, anthracene, pyrene, perylene and triphenylene), thioxanthones (for instance, isopropyl thioxanthone), xanthenes (for instance, fluorescein, eosin, erythrosin, rhodamine B and rose bengal), cyanines (for instance, thiacarbocyanine and oxacarbocyanine), merocyanines (for instance, merocyanine and carbomerocyanine), thiazines (for instance, thionine, methylene blue and toluidine blue), acridines (for instance, acridine orange, chloroflavin and acriflavine), anthraquinones (for instance, anthraquinone), squaliums (for instance, squalium) and coumarins (for instance, 7-diethylamino-4-methylcoumarin), the polynuclear aromatic compounds and thioxanthones being cited as preferable ones.

### [Cosensitizing agent]

The ink composition of the invention may also contain a cosensitizing agent. In the invention, the cosensitizing agent further improves the sensitivity of the sensitizing dye to actinic radiation or inhibits oxygen from disturbing the polymerization reaction of the polymerizable compound.

Examples of such cosensitizing agents include amines, for instance, compounds described in M. R. Sander et al., "Journal of Polymer Science", Vol. 10, p. 3173 (1972), JP-B No. 44-20189, JP-A Nos. 51-82102, 52-134692, 59-138205, 60-84305, 62-18537 and 64-33104, and Research Disclosure No. 33825. Specific examples of the cosensitizing agent include triethanolamine, ethyl p-dimethylaminobenzoate, p-formyldimethylaniline and p-methylthiodimethylaniline.

Other examples of the cosensitizing agents include thiols and sulfides, for instance, thiol compounds described in JP-A No. 53-702, JP-B No. 55-500806 and JP-A No. 5-142772, disulfide compounds described in JP-A No. 56-75643. Specific examples include 2-mercaptobenzothiazole, 2-mercaptobenzoxazole, 2-mercaptobenzimidazole, 2-mercapto-4(3H)-quinazoline, and β-mercaptonaphthalene.

Further other examples include amino acid compounds (for instance, N-phenylglycine), organometallic compounds described in JP-B No. 48-42965 (for instance, tributyltinacetate), hydrogen donors described in JP-B No. 55-34414, sulfur compounds described in JP-A No. 6-308727 (for instance, trithiane), phosphorus compounds described in JP-A No. 6-250387 (for instance, diethylphosphite) and Si-H, Ge-H compounds described in JP-A No. 8-65779.

### [Other components]

In the ink composition of the invention, other components may be added as needs arise. As the other components, for instance, a polymerization inhibitor and a solvent may be added.

The polymerization inhibitor may be added from the viewpoint of improving storage stability. The ink composition of the invention is preferably jetted after heating to a temperature in the range of 40 to 80°C to lower the viscosity. The polymerization inhibitor is preferably added in order to inhibit a head from being clogged due to thermal polymerization. The polymerization inhibitor is added preferably in the range of 200 to 20,000 ppm based on the total amount of the ink composition of the invention. Examples of the polymerization inhibitor include, for instance, hydroquinone, benzoquinone, p-methoxyphenol, TEMPO, TEMPOL and cupferron Al.

In consideration of the fact that the ink composition of the invention is a radiation-curable ink composition, it is preferable that the ink composition does not contain any solvent so as to react quickly and be cured immediately after jetting. However, as long as the curing speed of the ink composition is not affected, a predetermined solvent may be added. As a solvent, an organic solvent or water may be used in the invention. In particular, the organic solvent may be added in order to improve adhesiveness to a recording medium (support such as paper). Examples of the solvent that may be preferably used include propylene carbonate, dimethyl succinate, dimethyl glutarate, dimethyl adipate, and mixtures thereof. The amount of the organic solvent is, for example, in the range of 0.1 to 5% by mass, preferably in the range of 0.1 to 3% by mass, relative to the total amount of the ink composition of the invention.

Other known compounds may be optionally added to the ink composition of the invention. Examples of such additional compounds include a surfactant, a leveling additive, a matting agent, and a resin for adjusting film physical properties such as a polyester resin, a polyurethane resin, a vinyl resin, an acrylic resin, a rubber-based resin or a wax. A tackifier that does not disturb a polymerization reaction is preferably added in order to improve adhesiveness to recording media such as polyolefin or PET. Specific examples thereof include high-molecular weight adhesive polymers described in JP-A No. 2001-49200, pp. 5-6 (for instance, copolymers consisting of an ester of (meth)acrylic acid and alcohol having an alkyl group having 1 to 20 carbon atoms, an ester of (meth)acrylic acid and alicyclic alcohol having 3 to 14 carbon atoms and an ester of (meth)acrylic acid and aromatic alcohol having 6 to 14 carbon atoms), and low-molecular weight tackiness-imparting resins having a polymerizable unsaturated bond.

### [Properties of the ink composition]

Preferable physical properties of the ink composition of the invention will be described below.
In view of j ettability in an inkjet apparatus, the ink composition of the invention has viscosity preferably in the range of 7 to 30 mPa·s, more preferably in the range of 7 to 25 mPa·s, at a temperature during jetting (for instance, 40 to 80°C, preferably 25 to 50°C). For instance, the viscosity of the ink composition of the invention at room temperature (25 to 30°C) is preferably in the range of 10 to 50 mPa·s, more preferably in the range of 12 to 40 mPa·s.

It is preferable that the viscosity of the ink composition of the invention is adjusted in the above range by appropriately regulating its compounding ratio. When the viscosity at room temperature is set high, ink may be prevented from permeating into a recording medium even if it is a porous recording medium, and uncured monomers may be reduced and odor may be reduced. When an ink drop is landed, the ink may be inhibited from bleeding, resulting in improving image quality.

The surface tension of the ink composition of the invention is preferably in the range of 20 to 30 mN/m, more preferably in the range of 23 to 28 mN/m. When the ink composition is used in recording on various recording media such as polyolefin, PET, coated paper and non-coated paper, the surface tension is preferably 20 mN/m or more from the viewpoint of bleeding and permeation, and the surface tension is preferably 30 mN/m or less from the viewpoint of wettability.

### [Inkjet recording method]

The inkjet recording method of the invention, and an inkjet recording apparatus that may be applied to the inkjet recording method will be described below.

The inkjet recording method according to the invention comprises (i-1) jetting the inkjet recording ink composition according to the invention onto a recording medium; and (i-2) irradiating the jetted inkjet recording ink composition with an actinic radiation to cure the ink composition.
The inkjet recording method of the invention comprises the above steps (i-1) and (i-2), thereby forming an image by the ink composition cured on the recording medium.

In the step (i-1) of the inkjet recording method of the invention, an inkjet recording apparatus described in detail below may be used.

### - Inkjet recording apparatus -

The inkjet recording apparatus used in the inkjet recording method of the invention is not particularly restricted, and a known inkjet recording apparatus capable of achieving intended resolution may be arbitrarily selected and used. That is, any known inkjet recording apparatuses including commercial ones may be used in jetting ink onto a recording medium in the step (i-1) in the inkjet recording method of the invention.

The inkjet recording apparatus that may be used in the invention is equipped with, for example, an ink supply system, a temperature sensor, and an actinic radiation source.
The ink supply system comprises, for example, a main tank containing the ink composition of the invention, a supply pipe, an ink supply tank directly connected to an inkjet head, a filter, and a piezo type inkjet head. The piezo type inkjet head may be driven so as to jet a multisize dot of 1 to 100 pL, preferably 8 to 30 pL, at a resolution of 320x320 to 4,000x4,000 dpi, preferably 400x400 to 1,600x 1,600 dpi, more preferably 720x720 dpi. As used herein, dpi means the number of dots per 2.54 cm.

Since it is desirable that the radiation-curable ink such as the ink composition of the invention be jetted at a constant temperature, a section from the ink supply tank to the inkjet head may be thermally insulated and heated. A method of controlling temperature is not particularly limited, but it is preferable to provide, for example, temperature sensors at each of pipe sections, thereby controlling heating according to the ink flow rate and the temperature of the surroundings. The temperature sensors may be provided on the ink supply tank and in the vicinity of the inkjet head nozzle. The head unit that is to be heated is preferably thermally shielded or insulated so that the main body of the apparatus is not influenced by the temperature of the outside air. In order to reduce the printer start-up time required for heating or in order to reduce the thermal energy loss, it is preferable to thermally insulate the head unit from other sections and also to reduce the heat capacity of the entire heated unit.

Jetting of the ink composition of the invention with the above-mentioned inkjet recording apparatus is conducted preferably after the ink composition is heated to a temperature preferably in the range of 40 to 80°C, more preferably in the range of 25 to 50°C, to lower the viscosity of the ink composition preferably in the range of 7 to 30 mPa·s, more preferably in the range of 7 to 25 mPa·s. Particularly when the inkjet recording ink composition of the invention having an ink viscosity in the range of 35 to 500 mPa·s at 25°C is used, a significant effect may be preferably attained. By using this method, high jetting stability may be realized.

The radiation-curable ink composition such as the inkjet recording ink composition of the invention generally has higher viscosity than that of aqueous ink used in ordinary inkjet recording ink, and thus its viscosity varies significantly depending on temperature change during jetting. The variation of the ink viscosity significantly affects the variations of a liquid drop size and a liquid drop jetting speed, resulting in deterioration of image qualities. Accordingly, the temperature of ink during jetting should be kept as constant as possible. In the invention, therefore, control width of the ink temperature is set desirably at setting temperature ±5°C, preferably at setting temperature ±2°C, more preferably at setting temperature ±1 °C.

The step (i-2) of irradiating actinic radiation on the jetted ink composition to cure the ink composition will be described.

The ink composition jetted on the recording medium is cured by irradiation with actinic radiation. This is because the radical polymerization initiator contained in the ink composition of the invention, upon irradiation with actinic radiation, is decomposed to generate initiating species such as radical to cause and promote the polymerization reaction of the polymerizable compound contained in the ink composition by the function of the initiating species. At this time, when the radical polymerization initiator and the sensitizing dye are coexistent in the ink composition, the sensitizing dye in the system absorbs actinic radiation to be raised to an excited state. The excited sensitizing dye, when coming into contact with the radical polymerization initiator, promotes the decomposition of the initiator to achieve highly sensitive curing reaction.

Here, examples of the actinic radiation that is used include α-rays, γ-rays, electron beam, X-rays, UV-rays, visible rays or IR rays. Particularly, the actinic radiation is preferably any of electron beam, UV-rays and visible rays. The peak wavelength of the actinic radiation, through depending on the absorption characteristics of the sensitizing dye, is preferably in the range of 200 to 600 nm, more preferably in the range of 300 to 450 nm, still more preferably in the range of 350 to 420 nm.

A polymerization initiation system applied to the ink composition of the invention has sufficient sensitivity even by low-output actinic radiation. Accordingly, the output of the actinic radiation is preferably 2,000 mJ/cm² or less, more preferably in the range of 10 to 2,000 mJ/cm², still more preferably in the range of 20 to 1,000 mJ/cm², particularly preferably in the range of 50 to 800 mJ/cm².
For example, the actinic radiation is irradiated at an exposed surface illuminance in the range of 10 to 2,000 mW/cm², preferably in the range of 20 to 1,000 m W/cm².

As an actinic radiation source, a mercury lamp, a gas/solid laser, etc. are mainly used. For light source used in curing of UV photocuring inkjet recording ink, a mercury lamp and a metal halide lamp are widely known. However, from the viewpoint of protection of the environment, there has recently been a strong desire for mercury-free, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source has been expected.

Light-emitting diodes (LED) and laser diodes (LD) may be used as the source of actinic radiation. Particularly when a UV ray source is needed, a UV-LED or a UV-LD may be used. For example, Nichia Corporation has marketed a violet LED having a wavelength of the main emission spectrum of between 365 nm and 420 nm. For shorter wavelength, U.S. Pat. No. 6,084,250 discloses an LED that may emit actinic radiation whose wavelength is centered between 300 nm and 370 nm. Further, another violet LED is available, and irradiation may be carried out with radiation of a different UV bandwidth. The actinic radiation source particularly preferable in the invention is a UV-LED, and a UV-LED having a peak wavelength at 350 to 420 nm is particularly preferable.

The maximum illumination intensity of the LED on a recording medium is preferably 10 to 2,000 mW/cm², more preferably 20 to 1,000 mW/cm², particularly preferably 50 to 800 mJ/cm².

The inkjet recording ink composition of the invention is desirably exposed to such actinic radiation for a time of, for example, 0.01 to 120 sec., preferably 0.1 to 90 sec.
Irradiation conditions and a basic method for irradiation with actinic radiation are disclosed in JP-ANo. 60-132767. Specifically, a light source is provided on both side of a head unit that includes an ink jetting device, and the head unit and the light source are made to scan by a so-called shuttle system. Irradiation with actinic radiation is carried out after a certain time (e.g. 0.01 to 0.5 sec., preferably 0.01 to 0.3 sec., more preferably 0.01 to 0.15 sec.) has elapsed from when the ink has landed. By controlling the time from ink landing to irradiation so as to be a minimum in this way, it becomes possible to prevent the ink that has landed on a recording medium from bleeding before curing. Since the ink may be light exposed before it reaches a deep area of a porous recording medium where the light source may not reach, it is possible to prevent monomer from remaining unreacted, and as a result the odor may be reduced.

Curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light. Such curing method may also be applied to the inkjet recording method of the invention.

By employing such inkjet recording method, it is possible to maintain a uniform dot diameter for landed ink even for various types of recording media having different surface wettability, thereby improving the image quality. In order to obtain a color image, it is preferable to superimpose colors in order from those with low lightness. By superimposing inks in order from one with low lightness, it is easy for radiation to reach a lower ink, the curing sensitivity is improved, the amount of residual monomer decreases, odor is reduced, and an improvement in adhesiveness may be expected. Although it is possible to jet all colors and then expose them at the same time, it is preferable to expose one color at a time from the viewpoint of promoting curing.

In this way, the ink composition of the invention is cured with high sensitivity by irradiation with actinic radiation, thereby forming a highly fine and high-strength image on the surface of the recording medium. An image excellent in adhesiveness to the recording medium may also be formed.

The inkjet recording ink composition of the invention, when used in an inkjet apparatus, is an ink composition excellent in jetting stability without precipitating contained components around an inkjet head etc. and may thus enable stable image formation.
Exemplary embodiments of the invention are as follows.
<1>. An inkjet recording ink composition, comprising (A) polymerizable compounds comprising a monofunctional polymerizable monomer and a polyfunctional polymerizable monomer, and (B) a radical polymerization initiator, wherein
   (A) the polymerizable compounds comprise (A1) a polymerizable compound having, in a molecule thereof, an acryloyl group and an amino group, and
      a content ratio of the monofunctional polymerizable monomer with respect to the total amount of (A) the polymerizable compounds is from 90% by mass to 99.9% by mass, and a content ratio of the polyfunctional polymerizable monomer with respect to the total amount of (A) the polymerizable compounds is from 0.1 % by mass to 10% by mass.
<2>. The inkjet recording ink composition of <1>, wherein (A1) the polymerizable compound having, in a molecule thereof, an acryloyl group and an amino group is represented by the following formula (I): 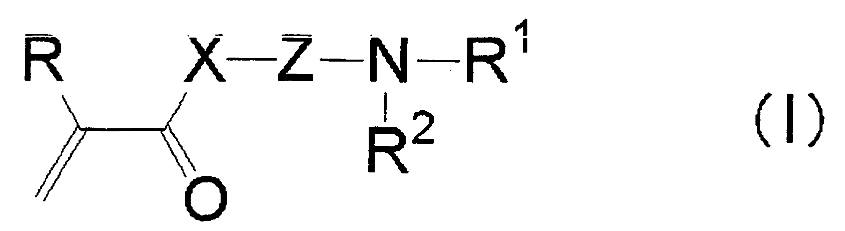 wherein R represents a hydrogen atom, X represents an oxygen atom, Z represents a divalent organic group or a single bond, R¹ and R² each independently represent an alkyl group having 1 to 8 carbon atoms, and R¹ and R², R¹ and Z, or R² and Z may be bonded to each other to form a ring structure.
<3>. The inkjet recording ink composition of <1>, wherein (A1) the polymerizable compound having, in a molecule thereof, an acryloyl group and an amino group has a pyrrolidine ring, a piperidine ring, or a morpholine ring.
<4>. An inkjet recording method comprising jetting the inkjet recording ink composition of <1> onto a recording medium, and curing the jetted ink composition by irradiation with actinic radiation.
<5>. The inkjet recording method of <4>, wherein (A1) the polymerizable compound having, in a molecule thereof, an acryloyl group and an amino group is represented by the following formula (I): 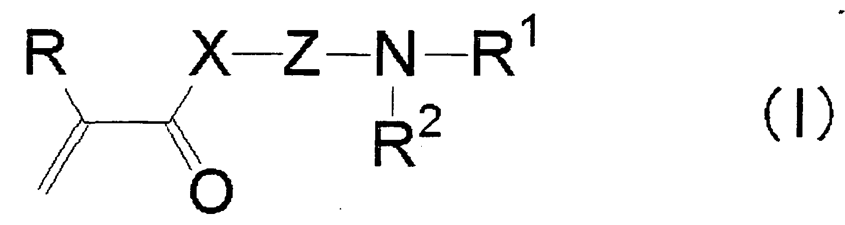 wherein R represents a hydrogen atom, X represents an oxygen atom Z represents a divalent organic group or a single bond, R¹ and R² each independently represent an alkyl group having 1 to 8 carbon atoms, and R¹ and R², R¹ and Z, or R² and Z may be bonded to each other to form a ring structure.
<6>. The inkjet recording method of <4>, wherein (A1) the polymerizable compound having, in a molecule thereof, an acryloyl group and an amino group has a pyrrolidine ring, a piperidine ring, or a morpholine ring.
Therefore, according to the invention, there may be provided an inkjet recording ink composition which has high sensitivity to irradiation with actinic radiations, may form a cured film excellent in curability and flexibility, is excellent in the adhesiveness between a cured film after curing and a recording medium and in blocking resistance, and is excellent in jetting stability when used in an inkjet apparatus, as well as an inkjet recording method using the ink composition.

### EXAMPLES

The invention is specifically described below by referring to the Examples. However, the invention is not limited to these examples. The following examples relate to the ink for UV inkjet recording of each color. In the following description, the term "parts" refers to "parts by mass", unless otherwise specified.

### Example 1

Components below were agitated by means of a high-speed water-cooling agitator, thereby yielding a cyan UV inkjet ink composition.

### (Cyan ink composition)

- Specific amine compound (exemplary compound (A-1)): (A) Component 14.8 parts
- Monofunctional ethylenically unsaturated monomer (trade name: SR339, manufactured by Sartomer) 67.0 parts
- Bifunctional ethylenically unsaturated monomer (trade name: SR9045, manufactured by Sartomer) 7.4 parts
- SOLSPERSE 32000 (trade name, manufactured by Noveon, dispersant) 1.2 parts
- IRGALITE BLUE GLVO (trade name, manufactured by Ciba Specialty Chemicals, pigment) 3.0 parts
- FIRSTCURE ST-1 (trade name, manufactured by ChemFirst, polymerization inhibitor) 0.05 parts
- LUCIRIN TPO (trade name, manufactured by BASF, photoinitiator): (B) Component 4.0 parts
- IRGACURE 369 (trade name, manufactured by Ciba Specialty Chemicals, photoinitiator): (B) Component 0.5 parts
- 4-Phenyl benzophenone (photoinitiator manufactured by Tokyo Chemical Industry Co., Ltd.): (B) Component 1.0 part
- DAROCUR ITX (trade name, manufactured by Ciba Specialty Chemicals, photoinitiator): (B) Component 1.0 part
- BYK 307 (trade name, manufactured by BYK Chemie, defoaming agent) 0.05 parts

### (Evaluation of the ink composition)

The obtained cyan ink composition in Example 1 was used in printing on a polyvinyl chloride sheet with an inkjet recording apparatus having a piezo type inkjet head (CA3 head manufactured by Toshiba Tec Corporation). The ink supply system comprised a main tank, a supply pipe, an ink supply tank directly connected to an inkjet head, a filter, and a piezo type inkjet head, and the temperature was controlled so that the nozzle section was always kept at 45°C±3°C (100% coverage image was printed). After the ink composition was jetted, the sheet was passed at a speed of 40 m/min. under a light from an iron-doped ultraviolet lamp (power 120 W/cm) for irradiation thereby curing the ink composition to yield a printed matter. The average thickness of the ink layer on the printed matter was about 13 µm.
At this time, the following evaluation was conducted. The results are shown in Table 1.

### <Curing sensitivity>

With an integrating actinometer, UV PowerMAP (trade name, manufactured by EIT Inc.), exposure energy in the curing was measured. Lower exposure energy was assumed to be indicative of curing with higher sensitivity. As a result, it was confirmed that an integrated exposure amount of UV rays on the sheet was about 400 mJ/cm², and thus the ink composition in Example 1 was cured with high sensitivity.

### <Curability>

The curability was evaluated by curing a printed matter of this ink composition by an integrated exposure amount of about 400 mJ/cm² UV rays on the sheet and then touching a cured image portion after curing. Curability was evaluated depending on whether the surface of the cured film was tacky or not.
As a result, it was confirmed that the tackiness on the cured film after curing was completely lost and thus the ink composition in Example 1 was excellent in curability.

### <Adhesiveness between a cured film and a recording medium>

The adhesiveness between a cured film and a recording medium was evaluated in a crosshatch test (EN ISO2409) and expressed in notations 5B to 1B in accordance with the ASTM method. It was assumed that 5B was indicative of the most excellent adhesiveness, and 3B or more was at a practically not problematic level.
As a result, the ink composition in Example 1 showed high adhesiveness, and its value was 4B in terms of notations under the ASTM method.

### <Flexibility of the cured film>

The flexibility of the cured film was evaluated by stretching the printed matter of 6 cm in length and 2 cm in width at room temperature (about 25°C) together with the polyvinyl chloride sheet until an image thereon was broken, determining the elongation rate at the time of breakage of the image, and determining its flexibility based on the elongation rate under the following criteria:
A: The elongation rate is 200% or more (sample was elongated to a length of 18 cm or more).
B: The elongation rate is 150% or more to less than 200% (sample was elongated to a length of 15 cm or more to less than 18 cm).
C: The elongation rate is 100% or more to less than 150% (sample was elongated to a length of 12 cm or more to less than 15 cm).
D: The elongation rate is less than 100% (sample was broken in a length of less than 12 cm).

### <Jetting stability>

The resulting ink composition was stored at 40°C for 8 weeks, and then used in printing on a recording medium with the inkjet recording apparatus having a piezo type inkjet nozzle. When printing was continued at ordinary temperature for 2 hours, dot missing and ink spreading were visually observed and evaluated under the following criteria:
A: Dot missing or ink spreading did not occur, or occurred 5 times or less.
B: Dot missing or ink spreading occurred 6 to 20 times.
C: Dot missing or ink spreading occurred 21 times or more.

### <Blocking resistance>

The printed surface of the printed matter of 105 cm×148 mm were faced with, and contacted with, an unprinted polyvinyl chloride sheet and then subjected to a loading of 4 kg for 48 hours at room temperature (about 25°C). Thereafter, both the sheets were released from each other, and the adherence of the ink onto the unprinted sheet was measured and evaluated under the following criteria:
A: Adherence of the ink is not observed.
B: Slight adherence of the.ink is observed.
C: The unprinted sheet has the ink adhering thereto.

### Example 2

Components below were agitated by means of a high-speed water-cooling agitator, thereby yielding a magenta UV inkjet ink composition.

### (Magenta ink composition)

- Specific amine compound (exemplary compound (A-1)): (A) Component 8.8 parts
- Monofunctional ethylenically unsaturated monomer (trade name: SR339, manufactured by Sartomer) 76.2 parts
- Multifunctional ethylenically unsaturated monomer (trade name: SR399, manufactured by Sartomer) 1.8 parts
- RAPI-CURE DVE-3 (bifunctional polymerizable compound) (vinyl ether compound manufactured by ISP Europe) 1.8 parts
- SOLSPERSE 32000 (trade name, manufactured by Noveon, dispersant) 1.2 parts
- CINQUASIA MAZENTA RT-355D (trade name, manufactured by Ciba Specialty Chemicals, pigment) 3.6 parts
- FIRSTCURE ST-1 (trade name, manufactured by ChemFirst, polymerization inhibitor) 0.05 part
- LUCIRIN TPO (trade name, manufactured by BASF, photoinitiator): (B) Component 3.0 parts
- IRGACURE 819 (trade name, manufactured by Ciba Specialty Chemicals, photoinitiator): (B) Component 1.0 part
- IRGACURE 369 (trade name, manufactured by Ciba Specialty Chemicals, photoinitiator): (B) Component 0.5 parts
- 4-Phenyl benzophenone (photoinitiator manufactured by Tokyo Chemical Industry Co., Ltd.): (B) Component 1.0 part
- DAROCUR ITX (trade name, manufactured by Ciba Specialty Chemicals, photoinitiator): (B) Component 1.0 part
- BYK 307 (trade name, manufactured by BYK Chemie, defoaming agent) 0.05 parts

The obtained magenta ink composition in Example 2 was jetted and cured on a polyvinyl chloride sheet in the same manner as in Example 1. The printed matter of this ink composition was evaluated in the same manner as in Example 1. The results are shown in Table 1.

### Example 3

Components below were agitated by means of a high-speed water-cooling agitator, thereby yielding a magenta UV inkjet ink composition.

### (Magenta ink composition)

- Specific amine compound (exemplary compound (A-19)): (A) Component 11.1 parts
- Monofunctional ethylenically unsaturated monomer (trade name: SR339, manufactured by Sartomer) 65.5 parts
- Monofunctional ethylenically unsaturated monomer (trade name: SR489, manufactured by Sartomer) 4.6 parts
- Multifunctional ethylenically unsaturated monomer (trade name: SR399, manufactured by Sartomer) 7.4 parts
- SOLSPERSE 32000 (trade name, manufactured by Noveon, dispersant) 1.2 parts
- CINQUASIA MAZENTA RT-355D (trade name, manufactured by Ciba Specialty Chemicals, pigment) 3.6 parts
- FIRSTCURE ST-1 (trade name, manufactured by ChemFirst, polymerization inhibitor) 0.05 parts
- LUCIRIN TPO (trade name, manufactured by BASF, photoinitiator): (B) Component 3.0 parts
- IRGACURE 819 (trade name, manufactured by Ciba Specialty Chemicals, photoinitiator): (B) Component 1.0 part
- IRGACURE 369 (trade name, manufactured by Ciba Specialty Chemicals, photoinitiator): (B) Component 0.5 parts
- 4-Phenyl benzophenone (photoinitiator manufactured by Tokyo Chemical Industry Co., Ltd.): (B) Component 1.0 part
- DAROCUR ITX (trade name, manufactured by Ciba Specialty Chemicals, photoinitiator): (C) Component 1.0 part
- BYK 307 (trade name, manufactured by BYK Chemie, defoaming agent) 0.05 parts

The obtained magenta ink composition in Example 3 was jetted and cured on a polyvinyl chloride sheet in the same manner as in Example 1. The printed matter of this ink composition was evaluated in the same manner as in Example 1. The results are shown in Table 1.

### Example 4

Components below were agitated by means of a high-speed water-cooling agitator, thereby yielding a magenta UV inkjet ink composition.

### (Magenta ink composition)

- Specific amine compound (exemplary compound (A-20)): (A) Component 11.1 parts
- Monofunctional ethylenically unsaturated monomer (trade name: SR339, manufactured by Sartomer) 55.5 parts
- Monofunctional ethylenically unsaturated monomer (trade name: SR506, manufactured by Sartomer) 19.6 parts
- Multifunctional ethylenically unsaturated monomer (trade name: SR399, manufactured by Sartomer) 2.4 parts
- SOLSPERSE 32000 (trade name, manufactured by Noveon, dispersant) 1.2 parts
- CINQUASIA MAZENTA RT-355D (trade name, manufactured by Ciba Specialty Chemicals, pigment) 3.6 parts
- FIRSTCURE ST-1 (trade name, manufactured by ChemFirst, polymerization inhibitor) 0.05 parts
- LUCIRIN TPO (trade name, manufactured by BASF, photoinitiator): (B) Component 3.0 parts
- IRGACURE 819 (trade name, manufactured by Ciba Specialty Chemicals, photoinitiator): (B) Component 1.0 part
- IRGACURE 369 (trade name, manufactured by Ciba Specialty Chemicals, photoinitiator): (B) Component 0.5 parts
- 4-Phenyl benzophenone (photoinitiator manufactured by Tokyo Chemical Industry Co., Ltd.): (B) Component 1.0 part
- DAROCUR ITX (trade name, manufactured by Ciba Specialty Chemicals, photoinitiator): (B) Component 1.0 part
- BYK 307 (trade name, manufactured by BYK Chemie, defoaming agent) 0.05 parts

The obtained magenta ink composition in Example 4 was jetted and cured on a polyvinyl chloride sheet in the same manner as in Example 1. The printed matter of this ink composition was evaluated in the same manner as in Example 1. The results are shown in Table 1.

### Example 5

Components below were agitated by means of a high-speed water-cooling agitator, thereby yielding a black UV inkjet ink composition.

### (Black ink composition)

- Specific amine compound (exemplary compound (A-1)): (A) Component 17.1 parts
- Monofunctional ethylenically unsaturated monomer (trade name: SR489, manufactured by Sartomer) 6.4 parts
- Monofunctional ethylenically unsaturated monomer (trade name: SR339, manufactured by Sartomer) 65.0 parts
- Multifunctional ethylenically unsaturated monomer (trade name: SR399, manufactured by Sartomer) 1.1 parts
- SOLSPERSE 32000 (trade name, manufactured by Noveon, dispersant) 1.2 parts
- MICROLITH BLACK C-K (trade name, manufactured by Ciba Specialty Chemicals, pigment) 2.6 parts
- FIRSTCURE ST-1 (trade name, manufactured by ChemFirst, polymerization inhibitor) 0.05 parts
- LUCIRIN TPO (trade name, manufactured by BASF, photoinitiator): (B) Component 4.0 parts
- IRGACURE 369 (trade name, manufactured by Ciba Specialty Chemicals, photoinitiator): (B) Component 0.5 parts
- Benzophenone (photoinitiator manufactured by Tokyo Chemical Industry Co., Ltd.): (B) Component 1.0 part
- DAROCUR ITX (trade name, manufactured by Ciba Specialty Chemicals, photoinitiator): (B) Component 1.0 part
- BYK 307 (trade name, manufactured by BYK Chemie, defoaming agent) 0.05 parts

The obtained black ink composition in Example 5 was jetted and cured on a polyvinyl chloride sheet in the same manner as in Example 1. The printed matter of this ink composition was evaluated in the same manner as in Example 1. The results are shown in Table 1.

### Example 6

Components below were agitated by means of a high-speed water-cooling agitator, thereby yielding a yellow UV inkjet ink composition.

### (Yellow ink composition)

- Specific amine compound (exemplary compound (A-1)): (A) Component 22.2 parts
- Monofunctional ethylenically unsaturated monomer (trade name: Kayarad R-128H, manufactured by Nippon Kayaku Co., Ltd.) 8.9 parts
- Monofunctional ethylenically unsaturated monomer (trade name: SR339, manufactured by Sartomer) 53.0 parts
- Multifunctional ethylenically unsaturated monomer (trade name: SR399, manufactured by Sartomer) 4.5 parts
- SOLSPERSE 32000 (trade name, manufactured by Noveon, dispersant) 1.2 parts
- Cromophtal Yellow LA (trade name, manufactured by Ciba Specialty Chemicals, pigment) 3.6 parts
- FIRSTCURE ST-1 (trade name, manufactured by ChemFirst, polymerization inhibitor) 0.05 parts
- LUCIRIN TPO (trade name, manufactured by BASF, photoinitiator): (B) Component 2.0 parts
- IRGACURE 819 (trade name, manufactured by Ciba Specialty Chemicals, photoinitiator): (B) Component 1.0 part
- IRGACURE 369 (trade name, manufactured by Ciba Specialty Chemicals, photoinitiator): (B) Component 0.5 parts
- IRGACURE 127 (trade name, manufactured by Ciba Specialty Chemicals, photoinitiator): (B) Component 1.0 part
- 4-Phenyl benzophenone (photoinitiator manufactured by Tokyo Chemical Industry Co., Ltd.): (B) Component 1.0 part
- DAROCUR ITX (trade name, manufactured by Ciba Specialty Chemicals, photoinitiator): (B) Component 1.0 part
- BYK 307 (trade name, manufactured by BYK Chemie, defoaming agent) 0.05 parts

The obtained yellow ink composition in Example 6 was jetted and cured on a polyvinyl chloride sheet in the same manner as in Example 1. The printed matter of this ink composition was evaluated in the same manner as in Example 1. The results are shown in Table 1.

### Example 7

Components below were agitated by means of a high-speed water-cooling agitator, thereby yielding a white UV inkjet ink composition.

### (White ink composition)

- Specific amine compound (exemplary compound (A-1)): (A) Component 15.6 parts
- Monofunctional acrylate (trade name: SR339, manufactured by Sartomer) 58.5 parts
- Multifunctional ethylenically unsaturated monomer (trade name: SR399, manufactured by Sartomer) 1.5 parts
- SOLSPERSE 36000 (trade name, manufactured by Noveon, dispersant) 2.4 parts
- MICROLITH WHITE R-A (trade name, manufactured by Ciba Specialty Chemicals, pigment) 16.0 parts
- FIRSTCURE ST-1 (trade name, manufactured by ChemFirst, polymerization inhibitor) 0.05 parts
- LUCIRIN TPO (trade name, manufactured by BASF, photoinitiator): (B) Component 4.4 parts
- IRGACURE 369 (trade name, manufactured by Ciba Specialty Chemicals, photoinitiator): (B) Component 0.3 parts
- 4-Phenyl benzophenone (photoinitiator manufactured by Tokyo Chemical Industry Co., Ltd.): (B) Component 1.0 part
- DAROCUR ITX (trade name, manufactured by Ciba Specialty Chemicals, photoinitiator): (B) Component 0.2 parts
- BYK 307 (trade name, manufactured by BYK Chemie, defoaming agent) 0.05 parts

The obtained white ink composition in Example 7 was jetted and cured on a polyvinyl chloride sheet in the same manner as in Example 1. The printed matter of this ink composition was evaluated in the same manner as in Example 1. The results are shown in Table 1.

### Comparative Example 1

Components below were agitated by means of a high-speed water-cooling agitator, thereby yielding a cyan UV inkjet ink composition.

### (Cyan ink composition)

- N-Vinyl caprolactam (trade name: V-CAP, manufactured by ISP Japan Corp.) 14.8 parts
- Monofunctional ethylenically unsaturated monomer (trade name: SR339, manufactured by Sartomer) 67.0 parts
- Bifunctional ethylenically unsaturated monomer (trade name: SR9045, manufactured by Sartomer) 7.4 parts
- SOLSPERSE 32000 (trade name, manufactured by Noveon, dispersant) 1.2 parts
- IRGALITE BLUE GLVO (trade name, manufactured by Ciba Specialty Chemicals, pigment) 3.0 parts
- FIRSTCURE ST-1 (trade name, manufactured by ChemFirst, polymerization inhibitor) 0.05 parts
- LUCIRIN TPO (trade name, manufactured by BASF, photoinitiator): (B) Component 4.0 parts
- IRGACURE 369 (trade name, manufactured by Ciba Specialty Chemicals, photoinitiator): (B) Component 0.5 parts
- 4-Phenyl benzophenone (photoinitiator manufactured by Tokyo Chemical Industry Co., Ltd.): (B) Component 1.0 part
- DAROCUR ITX (trade name, manufactured by Ciba Specialty Chemicals, photoinitiator): (B) Component 1.0 part
- BYK 307 (trade name, manufactured by BYK Chemie, defoaming agent) 0.05 parts

The obtained cyan ink composition in Comparative Example 1 was jetted and cured on a polyvinyl chloride sheet in the same manner as in Example 1. The printed matter of this ink composition was evaluated in the same manner as in Example 1. The results are shown in Table 1.

### Comparative Example 2

Components below were agitated by means of a high-speed water-cooling agitator, thereby yielding a cyan UV inkjet ink composition.

### (Cyan ink composition)

- Specific amine compound (exemplary compound (A-1)): (A) Component 14.8 parts
- Monofunctional ethylenically unsaturated monomer (trade name: SR339, manufactured by Sartomer) 74.4 parts
- SOLSPERSE 32000 (trade name, manufactured by Noveon, dispersant) 1.2 parts
- IRGALITE BLUE GLVO (trade name, manufactured by Ciba Specialty Chemicals, pigment) 3.0 parts
- FIRSTCURE ST-1 (trade name, manufactured by ChemFirst, polymerization inhibitor) 0.05 parts
- LUCIRIN TPO (trade name, manufactured by BASF, photoinitiator): (B) Component 4.0 parts
- IRGACURE 369 (trade name, manufactured by Ciba Specialty Chemicals, photoinitiator): (B) Component 0.5 parts
- 4-Phenyl benzophenone (photoinitiator manufactured by Tokyo Chemical Industry Co., Ltd.): (B) Component 1.0 part
- DAROCUR ITX (trade name, manufactured by Ciba Specialty Chemicals, photoinitiator): (B.) Component 1.0 part
- BYK 307 (trade name, manufactured by BYK Chemie, defoaming agent) 0.05 parts

The obtained cyan ink composition in Comparative Example 2 was jetted and cured on a polyvinyl chloride sheet in the same manner as in Example 1. The printed matter of this ink composition was evaluated in the same manner as in Example 1. The results are shown in Table 1.

### Comparative Example 3

Components below were agitated by means of a high-speed water-cooling agitator, thereby yielding a cyan UV inkjet ink composition.

### (Cyan ink composition)

- Specific amine compound (exemplary compound (A-1)): (A) Component 14.8 parts
- Monofunctional ethylenically unsaturated monomer (trade name: SR339, manufactured by Sartomer) 61.0 parts
- Bifunctional ethylenically unsaturated monomer (trade name: SR9045, manufactured by Sartomer) 13.4 parts
- SOLSPERSE 32000 (trade name, manufactured by Noveon, dispersant) 1.2 parts
- IRGALITE BLUE GLVO (trade name, manufactured by Ciba Specialty Chemicals, pigment) 3.0 parts
- FIRSTCURE ST-1 (trade name, manufactured by ChemFirst, polymerization inhibitor) 0.05 parts
- LUCIRIN TPO (trade name, manufactured by BASF, photoinitiator): (B) Component 4.0 parts
- IRGACURE 369 (trade name, manufactured by Ciba Specialty Chemicals, photoinitiator): (B) Component 0.5 parts
- 4-Phenyl benzophenone (photoinitiator manufactured by Tokyo Chemical Industry Co., Ltd.): (B) Component 1.0 part
- DAROCUR ITX (trade name, manufactured by Ciba Specialty Chemicals, photoinitiator): (B) Component 1.0 part
- BYK 307 (trade name, manufactured by BYK Chemie, defoaming agent) 0.05 parts

The obtained cyan ink composition in Comparative Example 3 was jetted and cured on a polyvinyl chloride sheet in the same manner as in Example 1. The printed matter of this ink composition was evaluated in the same manner as in Example 1. The results are shown in Table 1.

**Table 1**

| | Exposure amount (mJ/cm²) | Curability | Adhesiveness | Flexibility | Jetting stability | Blocking resistance |
|---|---|---|---|---|---|---|
| Example 1 | 400 | good | 4B | A | A | A |
| Example 2 | 400 | good | 4B | A | A | A |
| Example 3 | 400 | good | 4B | A | A | A |
| Example 4 | 400 | good | 4B | B | A or B | A |
| Example 5 | 400 | good | 4B | A | A | A |
| Example 6 | 400 | good | 5B | A | A | A |
| Example 7 | 400 | good | 4B | A | A | A |
| Comparative Example 1 | 400 | tacky | 3B | B | B | C |
| Comparative Example 2 | 400 | tacky | 3B | D | A | C |
| Comparative Example 3 | 400 | good | 2B | D | A | A |

As may be seen from Table 1, the ink compositions in Examples 1 to 7 were all cured with high sensitivity, and were excellent in all items of curability, adhesiveness to a recording medium, flexibility, and jetting stability.
On the other hand, it may be seen that the ink composition using N-vinyl caprolactam in Comparative Example 1 was tacky on the surface of the cured film and was inferior in adhesiveness, jetting stability in an inkjet apparatus, and blocking resistance. The multifunctional monomer-free ink composition in Comparative Example 2 was tacky on the cured film, was inferior in adhesiveness, and was significantly inferior in flexibility of the cured film and blocking resistance. The ink composition in Comparative Example 3 wherein the ratio of the monofunctional monomer and the multifunctional monomer is outside of the scope of the invention was significantly inferior in adhesiveness to a recording medium and in flexibility of a cured film.

## Claims

1. An inkjet recording ink composition, comprising (A) polymerizable compounds comprising a monofunctional polymerizable monomer and a polyfunctional polymerizable monomer, and (B) a radical polymerization initiator, wherein
(A) the polymerizable compounds comprise (A1) a polymerizable compound having, in a molecule thereof, an acryloyl group and an amino group, and a content ratio of the monofunctional polymerizable monomer with respect to the total amount of (A) the polymerizable compounds is from 90% by mass to 99.9% by mass, and a content ratio of the polyfunctional polymerizable monomer with respect to the total amount of (A) the polymerizable compounds is from 0.1 % by mass to 10% by mass, with the proviso that the inkjet recording ink composition is not selected from the following compositions:
Composition(1):
• Specific cyclic amine compound [Listed compound (A-1): (A) component] 4.0 parts
• Specific alicyclic monomer [Listed compound (B-21): (B) component] 34.0 parts
• Tridecyl acrylate (manufactured by Sartomer Inc., SR498E) 7.0 parts
• 2-Phenoxyethyl acrylate (manufactured by Sartomer Inc., SR339) 24.4 parts
• Trimethylolpropane triacrylate 5.0 parts (manufactured by Sartomer Inc., SR351)
• Solsperse 32000 (manufactured by Noveon Inc., dispersing agent) 0.4 part
• Cinquasia Mazenta RT-355D (manufactured by Ciba Specialty Chemicals, Pigment: (D) component) 3.6 parts
• Genorad 16 (manufactured by Rahn AG, polymerization inhibitor) 0.05 part
• Rapi-Cure DVE-3 (manufactured by ISP Europe Ltd., vinyl ether compound) 4.0 parts
• Lucirin TPO (manufactured by BASF AG, photoinitiator: (C) component) 8.5 parts
• Benzophenone (photoinitiator: (C) component) 3.0 parts
• Irgacure 184 (manufactured by Ciba Specialty Chemicals, photoinitiator: (C) component) 4.0 parts
• Irgacure 369 (manufactured by Ciba Specialty Chemicals, photoinitiator (C) component) 1.0 part
• Isopropylthioxanthone (manufactured by Ciba Specialty Chemicals, DAROCUR ITX) 1.0 part
• Byk 307 (manufactured by BYK Chemie GmbH, antifoaming agent) 0.05 part
Composition (2):
• Specific cyclic amine compound [Listed compound (A-22): (A) component] 3.0 parts
• Specific alicyclic monomer [Listed compound (B-21): (B) component] 34.0 parts
• 2-Phenoxyethyl acrylate (manufactured by Sanomer Inc., SR339) 32.4 parts
• Trimethylolpropane triacrylate (manufactured by Sartomer Inc., SR351) 2.0 parts
• Dipropylene glycol diacrylate (manufactured by Sartomer Inc., SR508) 3.0 parts
• Solsperse 32000 (manufactured by Noveon Inc., dispersing agent) 0.4 part
• Cromophtal Yellow LA (manufactured by Ciba Specialty Chemicals, pigment: (D) component) 3.6 parts
• Genorad 16 (manufactured by Rahn AG, polymerization inhibitor) 0.05 part
• Rapi-Cure DVE-3 (manufactured by ISP Europe Ltd., vinyl ether compound) 2.0 parts
• Lucirin TPO (manufactured by BASF AG, photoinitiator: (C) component) 6.5 parts
• Benzophenone (photoinitiator: (C) component) 4.0 parts
• Irgacure 184 (manufactured by Ciba Specialty Chemicals, photoinitiator: (C) component) 4.0 parts
• Irgacure 819 (manufactured by Ciba Specialty Chemicals, photoinitiator: (C) component) 2.0 parts
• Isopropylthioxanthone (manufactured by Ciba Specialty Chemicals, DAROCUR ITX) 1.0 part
• Byk 307 (manufactured by BYK Chemie GmbH, antifoaming agent) 0.05 part
Composition (3):
• Specific cyclic amine compound [Listed compound (A-1): (A) component] 20.0 parts
• N-Vinylcaprolactam 15.0 parts
• 2-Phenoxyethyl acrylate (manufactured by Sartomer Inc., SR339) 26.4 parts
• Trimethylolpropane triacrylate (manufactured by Sartomer Inc., SR351) 5.0 parts
• Solsperse 32000 (manufactured by Noveon Inc., dispersing agent) 0.4 part
• Cinquasia Mazenta RT-355D [(D) component] (manufactured by Ciba Specialty Chemicals, pigment) 3.6 parts
• Genorad 16 (manufactured by Rahn AG, polymerization inhibitor) 0.05 part
• Rapi-Cure DVE-3 (manufactured by ISP Europe Ltd., vinyl ether compound) 4.0 parts
• Lucirin TPO (manufactured by BASF AG, photoinitiator: (C) component) 8.5 parts
• Benzophenone (photoinitiator: (C) component) 4.0 parts
• Irgacure 184 (manufactured by Ciba Specialty Chemicals, photoinitiator: (C) component) 4.0 parts
• Isopropylthioxanthone (ITX) 1.0 part
• Byk 307 (manufactured by BYK Chemie GmbH, antifoaming agent) 0.05 part
Composition (4):
• Specific cyclic amine compound [Listed compound (A-1):(A) component] 18.0 parts
• Specific cyclic amine compound [Listed compound (A-14): (A) component] 4.0 parts
• N-Vinylcaprolactam 16.0 parts
• 2-Phenoxyethyl acrylate (manufactured by Sartomer Inc., SR339) 21.4 parts
• Trimethylolpropane triacrylate (manufactured by Sartomer Inc., SR351) 3.0 parts
• Dipropylene glycol diacrylate (manufactured by Sartomer Inc., SR508) 1.0 parts
• Solsperse 32000 (manufactured by Noveon Inc., dispersing agent) 0.4 part
• Cromophtal Yellow LA, (D)component (manufactured by Ciba Specialty Chemicals, pigment) 3.6 parts
• Genorad 16 (manufactured by Rahn AG, polymerization inhibitor) 0.05 part
• Rapi-Cure DVE-3 (manufactured by ISP Europe Ltd., vinyl ether compound) 2.0 parts
• Lucirin TPO (manufactured by BASF AG, photoinitiator:(C) component) 8.5 parts
• Benzophenone (photoinitiator (C) component 4.0 parts
• Irgacure 184 (manufactured by Ciba Specialty Chemicals, photoinitiator: (C) component) 4.0 parts
• Isopropylthioxanthone (ITX) 1.0 part
• Byk 307 (manufactured by BYK Chemie GmbH, antifoaming agent) 0.05 part
Composition (5):
• Specific cyclic amine compound [Listed compound (A-12):(A) component) 26.0 parts
• 2-Phenoxyethyl acrylate (manufactured by Sartomer Inc., SR339) 38.4 parts
• Trimethyloloropane triacrylate (manufactured by Sartomer Inc., SR351) 2.0 parts
• Dipropylene glycol diacrylate (manufactured by Sartomer Inc., SR508) 2.0 parts
• Solsperse 32000 (manufactured by Noveon Inc., dispersing agent) 0.4 part
• Irgalite Blue GLVO [(D) component] (manufactured by Ciba Specialty Chemicals, pigment) 3.6 parts
• Genorad 16 (manufactured by Rahn AG, polymerization inhibitor) 0.05 part
• Rapi-Cure DVE-3 (manufactured by ISP Europe Ltd., vinyl ether compound) 2.0 parts
• Lucirin TPO (manufactured by BASF AG, photoinitiator:(C) component) 8.5 parts
• Benzophenone (photoinitiator: (C) component) 4.0 parts
• Irgacure 184 (manufactured by Ciba Specialty Chemicals, photoinitiator: (C) component) 4.0 parts
• Isopropylthioxanthone (ITX) 1.0 part
• Byk 307 (manufactured by BYK Chemie GmbH, antifoaming agent) 0.05 part
wherein compounds (A-1), (A-12), (A-14), (A-22) and (B-21) are defined as follows:

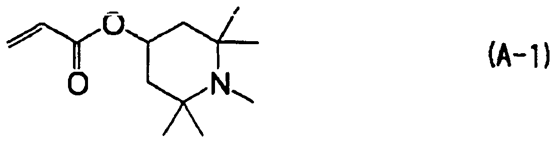

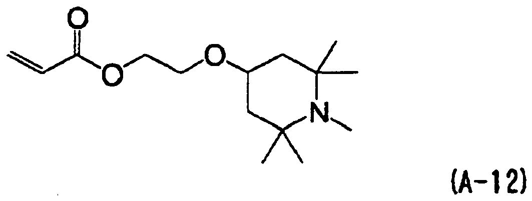

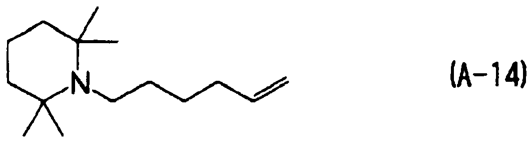

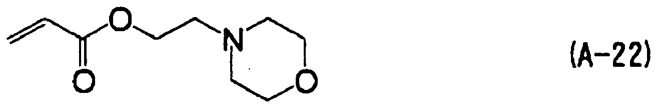

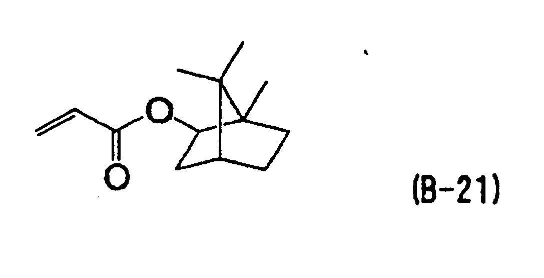

2. The inkjet recording ink composition of claim 1, wherein (A1) the polymerizable compound having, in a molecule thereof, a polymerizable unsaturated bond and an amino group is represented by the following formula (I): wherein R represents a hydrogen atom, X represents an oxygen atom, Z represents a divalent organic group or a single bond, R¹ and R² each independently represent an alkyl group having 1 to 8 carbon atoms, and R¹ and R², R¹ and Z, or R² and Z may be bonded to each other to form a ring structure.

3. The inkjet recording ink composition of claim 1, wherein (A1) the polymerizable compound having, in a molecule thereof, a polymerizable unsaturated bond and an amino group has a pyrrolidine ring, a piperidine ring, or a morpholine ring.

4. An inkjet recording method comprising jetting the inkjet recording ink composition of claim 1 onto a recording medium, and curing the jetted ink composition by irradiation with actinic radiation.

5. The inkjet recording method of claim 4, wherein (A1) the polymerizable compound having, in a molecule thereof, an acryloyl group and an amino group is represented by the following formula (I): 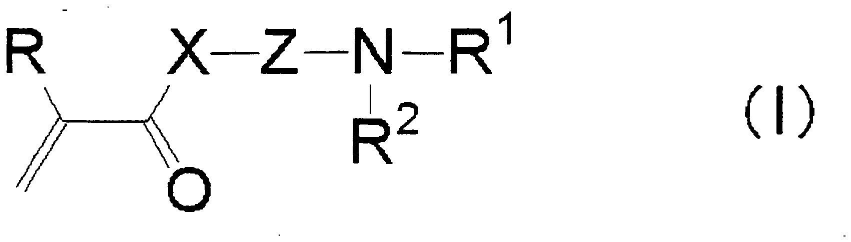 wherein R represents a hydrogen atom, X represents an oxygen atom, Z represents a divalent organic group or a single bond, R¹ and R² each independently represent an alkyl group having 1 to 8 carbon atoms, and R¹ and R², R¹ and Z, or R² and Z may be bonded to each other to form a ring structure.

6. The inkjet recording method of claim 4, wherein (A1) the polymerizable compound having, in a molecule thereof, an acryloyl group and an amino group has a pyrrolidine ring, a piperidine ring, or a morpholine ring.

7. The inkjet recording ink composition of claim 1, wherein the content ratio of the monofunctional monomer is 97 to 99.5 % by mass, and the content ratio of the multifunctional monomer is 0.5 to 3 % by mass, with respect to the total amount of the polymerizable compounds contained in the ink composition.

8. The inkjet recording method of claim 4, wherein the content ratio of the monofunctional monomer is 97 to 99.5 % by mass, and the content ratio of the multifunctional monomer is 0.5 to 3 % by mass, with respect to the total amount of the polymerizable compounds contained in the ink composition.

## Patentansprüche

1. Tintenstrahlaufzeichnungs-Tintenzusammensetzung, umfassend (A) polymerisierbare Verbindungen, die ein monofunktionelles polymerisierbares Monomer und ein polyfunktionelles polymerisierbares Monomer umfassen; und (B) einen Radikalischen Polymerisationsinitiator, worin:
die polymerisierbaren Verbindungen (A) eine polymerisierbare Verbindung (A1) umfassen, die in einem Molekül davon eine Acryloylgruppe und eine Aminogruppe aufweist, und
(B) der Mengenanteil des monofunktionellen polymerisierbaren Monomers in bezug auf die Gesamtmenge der polymerisierbaren Verbindungen(A) 90 bis 99,9 Masse-% beträgt und der Mengenanteil des polyfunktionellen polymerisierbaren Monomers in bezug auf die Gesamtmenge der polymerisierbaren Verbindungen (A) 0,1 bis 10 Masse-% beträgt, mit der Massgabe, dass die Tintenstrahlaufzeichnungs-Tintenzusammensetzung nicht aus den nachstehenden Zusammensetzungen ausgewählt ist:
| **Zusammensetzung (1):** | Teile |
|---|---|
| Spezifische cyclische Aminverbindung [aufgeführte Verbindung (A-1): Komponente (A)] | 4,0 |
| Spezifisches alicyclisches Monomer [aufgeführte Verbindung (B-21): Komponente (B)] | 34,0 |
| Tridecylacrylat (hergestellt von Sartomer Inc., SR498E) | 7,0 |
| 2-Phenoxyethylacrylat (hergestellt von Sartomer | 24,4 |
| Inc., SR339) | |
| Trimethylolpropantriacrylat (hergestellt von Sartomer Inc., SR351) | 5,0 |
| Solsperse 32000 (hergestellt von Noveon Inc., Dispergiermittel) | 0,4 |
| Cinquasia Mazenta RT-355D (hergestellt von Ciba Specialty Chemicals, Pigment: Komponente (D)) | 3,6 |
| Genorad 16 (hergestellt von Rahn AG, Polymerisationsinhibitor) | 0,05 |
| Rapi-Cure DVE-3 (hergestellt von ISP Europe Ltd., Vinyletherverbindung) | 4,0 |
| Lucirin TPO (hergestellt von BASF AG, Fotoinitiator: Komponente (C)) | 8,5 |
| Benzophenon (Fotoinitiator: Komponente (C)) | 3,0 |
| Irgacure 184 (hergestellt von Ciba Specialty Chemicals, Fotoinitiator: Komponente (C)) | 4,0 |
| Irgacure 369 (hergestellt von Ciba Specialty Chemicals, Fotoinitiator: Komponente (C)) | 1,0 |
| Isopropylthioxanthon (hergestellt von Ciba Specialty Chemicals, DAROCUR ITX) | 1,0 |
| Byk 307 (hergestellt von BYK Chemie GmbH, Antischäumungsmittel) | 0,05 |
| **Zusammensetzung (2):** | Teile |
|---|---|
| Spezifische cyclische Aminverbindung [aufgeführte Verbindung (A-22): Komponente (A)] | 3,0 |
| Spezifisches alicyclisches Monomer [aufgeführte Verbindung (B-21): Komponente (B)] | 34,0 |
| 2-Phenoxyethylacrylat (hergestellt von Sartomer Inc., SR339) | 32,4 |
| Trimethylolpropantriacrylat (hergestellt von Sartomer Inc., SR351) | 2,0 |
| Dipropylenglykoldiacrylat (hergestellt von Sartomer Inc., SR508) | 3,0 |
| Solsperse 32000 (hergestellt von Noveon Inc., Dispergiermittel) | 0,4 |
| Cromophtal Yellow LA (hergestellt von Ciba Specialty Chemicals, Pigment: Komponente (D)) | 3,6 |
| Genorad 16 (hergestellt von Rahn AG, Polymerisationsinhibitor) | 0,05 |
| Rapi-Cure DVE-3 (hergestellt von ISP Europe Ltd., Vinyletherverbindung) | 2,0 |
| Lucirin TPO (hergestellt von BASF AG, Fotoinitiator: Komponente (C)) | 6,5 |
| Benzophenon (Fotoinitiator: Komponente (C)) | 4,0 |
| Irgacure 184 (hergestellt von Ciba Specialty Chemicals, Fotoinitiator: Komponente (C)) | 4,0 |
| Irgacure 819 (hergestellt von Ciba Specialty Chemicals, Fotoinitiator: Komponente (C)) | 2,0 |
| Isopropylthioxanthon (hergestellt von Ciba Specialty Chemicals, DAROCUR ITX) | 1,0 |
| Byk 307 (hergestellt von BYK Chemie GmbH, Antischäumungsmittel) | 0,05 |
| **Zusammensetzung (3):** | Teile |
|---|---|
| Spezifische cyclische Aminverbindung [aufgeführte Verbindung (A-1): Komponente (A)] | 20,0 |
| N-Vinylcaprolactam | 15,0 |
| 2-Phenoxyethylacrylat (hergestellt von Sartomer Inc., SR339) | 26,4 |
| Trimethylolpropantriacrylat (hergestellt von Sartomer Inc., SR351) | 5,0 |
| Solsperse 32000 (hergestellt von Noveon Inc., Dispergiermittel) | 0,4 |
| Cinquasia Mazenta RT-355D [Komponente (D)] (hergestellt von Ciba Specialty Chemicals, Pigment) | 3,6 |
| Genorad 16 (hergestellt von Rahn AG, Polymerisationsinhibitor) | 0,05 |
| Rapi-Cure DVE-3 (hergestellt von ISP Europe Ltd., Vinyletherverbindung) | 4,0 |
| Lucirin TPO (hergestellt von BASF AG, Fotoinitiator: Komponente (C)) | 8,5 |
| Benzophenon (Fotoinitiator: Komponente (C)) | 4,0 |
| Irgacure 184 (hergestellt von Ciba Specialty Chemicals, Fotoinitiator: Komponente (C)) | 4,0 |
| Isopropylthioxanthon (ITX) | 1,0 |
| Byk 307 (hergestellt von BYK Chemie GmbH, Antischäumungsmittel) | 0,05 |
| **Zusammensetzung (4):** | Teile |
|---|---|
| Spezifische cyclische Aminverbindung [aufgeführte Verbindung (A-1): Komponente (A)] | 18,0 |
| Spezifische cyclische Aminverbindung [aufgeführte Verbindung (A-14): Komponente (A)] | 4,0 |
| N-Vinylcaprolactam | 16,0 |
| 2-Phenoxyethylacrylat (hergestellt von Sartomer | 21,4 |
| Inc., SR339) | |
| Trimethylolpropantriacrylat (hergestellt von Sartomer Inc., SR351) | 3,0 |
| Dipropylenglykoldiacrylat (hergestellt von Sartomer Inc., SR508) | 1,0 |
| Solsperse 32000 (hergestellt von Noveon Inc., Dispergiermittel) | 0,4 |
| Cromophtal Yellow LA, Komponente (D) (hergestellt von Ciba Specialty Chemicals, Pigment) | 3,6 |
| Genorad 16 (hergestellt von Rahn AG, Polymerisationsinhibitor) | 0,05 |
| Rapi-Cure DVE-3 (hergestellt von ISP Europe Ltd., Vinyletherverbindung) | 2,0 |
| Lucirin TPO (hergestellt von BASF AG, Fotoinitiator: Komponente (C)) | 8,5 |
| Benzophenon (Fotoinitiator: Komponente (C) | 4,0 |
| Irgacure 184 (hergestellt von Ciba Specialty Chemicals, Fotoinitiator: Komponente (C)) | 4,0 |
| Isopropylthioxanthon (ITX) | 1,0 |
| Byk 307 (hergestellt von BYK Chemie GmbH, Antischäumungsmittel) | 0,05 |
| **Zusammensetzung (5):** | Teile |
|---|---|
| Spezifische cyclische Aminverbindung [aufgeführte Verbindung (A-12): Komponente (A)] | 26,0 |
| 2-Phenoxyethylacrylat (hergestellt von Sartomer Inc., SR339) | 38,4 |
| Trimethylolpropantriacrylat (hergestellt von Sartomer Inc., SR351) | 2,0 |
| Dipropylenglykoldiacrylat (hergestellt von Sartomer Inc., SR508) | 2,0 |
| Solsperse 32000 (hergestellt von Noveon Inc., Dispergiermittel) | 0,4 |
| Irgalite Blue GLVO [Komponente (D)] (hergestellt von Ciba Specialty Chemicals, Pigment) | 3,6 |
| Genorad 16 (hergestellt von Rahn AG, Polymerisationsinhibitor) | 0,05 |
| Rapi-Cure DVE-3 (hergestellt von ISP Europe Ltd., Vinyletherverbindung) | 2,0 |
| Lucirin TPO (hergestellt von BASF AG, Fotoinitiator: Komponente (C)) | 8,5 |
| Benzophenon (Fotoinitiator: Komponente (C)) | 4,0 |
| Irgacure 184 (hergestellt von Ciba Specialty Chemicals, Fotoinitiator: Komponente (C)) | 4,0 |
| Isopropylthioxanthon (ITX) | 1,0 |
| Byk 307 (hergestellt von BYK Chemie GmbH, Antischäumungsmittel) | 0,05 |
worin die Verbindungen (A-1), (A-12), (A-14), (A-22) und (B-21) wie nachstehend definiert sind:

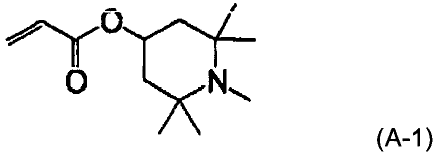

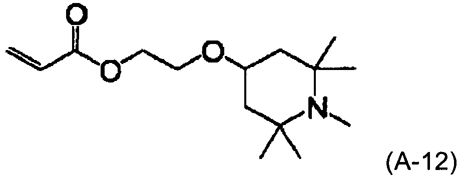

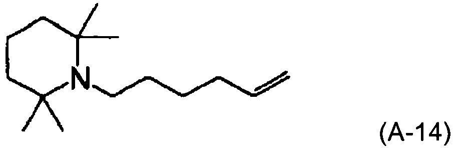

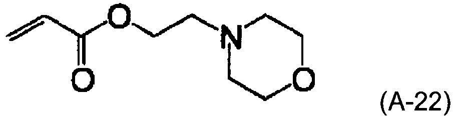

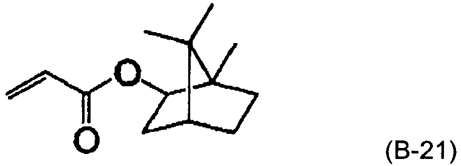

2. Tintenstrahlaufzeichnungs-Tintenzusammensetzung gemäss Anspruch 1, wobei die polymerisierbare Verbindung (A1), die in einem Molekül davon eine polymerisierbare ungesättigte Bindung und eine Aminogruppe aufweist, durch die nachstehende Formel (I) dargestellt ist: 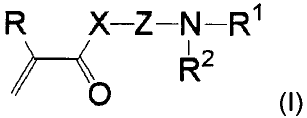 worin R ein Wasserstoffatom darstellt, X ein Sauerstoffatom darstellt, Z eine divalente organische Gruppe oder eine Einfachbindung darstellt und R¹ und R² unabhängig jeweils eine Alkylgruppe mit 1 bis 8 Kohlenstoffatomen darstellen und R¹ und R², R¹ und Z oder R² und Z jeweils miteinander verbunden sein können, um eine Ringstruktur zu bilden.

3. Tintenstrahlaufzeichnungs-Tintenzusammensetzung gemäss Anspruch 1, worin die polymerisierbare Verbindung (A1), die in einem Molekül davon eine polymerisierbare ungesättigte Bindung und eine Aminogruppe aufweist, einen Pyrrolidinring, einen Piperidinring oder einen Morpholinring aufweist.

4. Tintenstrahl-Aufzeichnungsverfahren, umfassend das Ausstossen der Tintenstrahlaufzeichnungs-Tintenzusammensetzung gemäss Anspruch 1 auf ein Aufzeichnungsmedium und Härten der ausgestossenen Tintenzusammensetzung durch Bestrahlung mit aktinischer Strahlung.

5. Tintenstrahl-Aufzeichnungsverfahren gemäss Anspruch 4, worin die polymerisierbare Verbindung (A1), die in einem Molekül davon eine Acryloylgruppe und eine Aminogruppe aufweist, durch die nachstehende Formel (I) dargestellt ist: 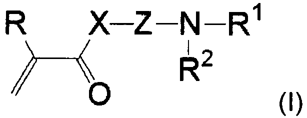 worin R ein Wasserstoffatom darstellt, X ein Sauerstoffatom darstellt, Z eine divalente organische Gruppe oder eine Einfachbindung darstellt und R¹ und R² unabhängig jeweils eine Alkylgruppe mit 1 bis 8 Kohlenstoffatomen darstellen und R¹ und R², R¹ und Z oder R² und Z jeweils miteinander verbunden sein können, um eine Ringstruktur zu bilden.

6. Tintenstrahl-Aufzeichnungsverfahren gemäss Anspruch 4, worin die polymerisierbare Verbindung (A1), die in einem Molekül davon eine Acryloylgruppe und eine Aminogruppe aufweist, einen Pyrrolidinring, einen Piperidinring oder einen Morpholinring aufweist.

7. Tintenstrahlaufzeichnungs-Tintenzusammensetzung gemäss Anspruch 1, wobei der Mengenanteil des monofunktionellen Monomers 97 bis 99,5 Masse-% beträgt und der Mengenanteil des multifunktionellen Monomers in bezug auf die Gesamtmenge der polymerisierbaren Verbindungen, die in der Tintenzusammensetzung enthalten sind, 0,5 bis 3 Masse-% beträgt.

8. Tintenstrahlaufzeichnungs-Tintenzusammensetzung gemäss Anspruch 4, wobei der Mengenanteil des monofunktionellen Monomers 97 bis 99,5 Masse-% beträgt und der Mengenanteil des multifunktionellen Monomers in bezug auf die Gesamtmenge der polymerisierbaren Verbindungen, die in der Tintenzusammensetzung enthalten sind, 0,5 bis 3 Masse-% beträgt.

## Revendications

1. Composition d'encre pour enregistrement par jet d'encre, comprenant (A) des composés polymérisables comprenant un monomère polymérisable monofonctionnel et un monomère polymérisable polyfonctionnel, et (B) un initiateur de polymérisation radicalaire, dans laquelle
(A) les composés polymérisables comprennent (A1) un composé polymérisable ayant, dans une molécule de celui-ci, un groupe acryloyle et un groupe amino, et
un rapport de teneurs du monomère polymérisable monofonctionnel par rapport à la quantité totale de (A) les composés polymérisables est de 90% en masse à 99,9% en masse, et un rapport de teneurs du monomère polymérisable polyfonctionnel par rapport à la quantité totale de (A) les composés polymérisables est de 0,1% en masse à 10% en masse, sous réserve que la composition d'encre pour enregistrement par jet d'encre ne soit pas choisie parmi les compositions suivantes :
Composition (1) :
• Composé amine cyclique spécifique [Composé listé (A-1) : composant (A)] 4,0 parties
• Monomère alicyclique spécifique [Composé listé (B-21) : composant (B)] 34,0 parties
• Acrylate de tridécyle (fabriqué par Sartomer Inc. SR498E) 7,0 parties
• Acrylate de 2-phénoxyéthyle (fabriqué par Sartomer Inc. SR339) 24,4 parties
• Triacrylate de triméthylolpropane (fabriqué par Sartomer Inc. SR351) 5,0 parties
• Solsperse 32000 (fabriqué par Noveon Inc., agent de dispersion) 0,4 partie
• Cinquesia Mazenta RT-355D (fabriqué par Ciba Specialty Chemicals, pigment : composant (D) 3,6 parties
• Genorad 16 (fabriqué par Rahn AG, inhibiteur de polymérisation) 0,05 partie
• Rapi-Cure DVE-3 (fabriqué par ISP Europe Ltd., composé éther vinylique) 4,0 parties
• Lucirin TPO (fabriqué par BASF AG, photoinitiateur : composant (C)) 8,6 parties
• Benzophénone (photoinitiateur : composant (C)) 3,0 parties
• Irgacure 184 (fabriqué par Ciba Specialty Chemicals, photoinitiateur : composant (C)) 4,0 parties
• Irgacure 369 (fabriqué par Ciba Specialty Chemicals, photoinitiateur : composant (C)) 1,0 partie
• Isopropylthioxanthone (fabriqué par Ciba Specialty Chemicals, DAROCUR ITX) 1,0 partie
• Byk 307 (fabriqué par BYK Chemie GmbH, agent antimousse) 0,05 partie
Composition (2) :
• Composé amine cyclique spécifique [Composé listé (A-22) : composant (A)] 3,0 parties
• Monomère alicyclique spécifique [Composé listé (B-21) : composant (B)] 34,0 parties
• Acrylate de 2-phénoxyéthyle (fabriqué par Sartomer Inc. SR339) 32,4 parties
• Triacrylate de triméthylolpropane (fabriqué par Sartomer Inc. SR351) 2,0 parties
• Diacrylate de dipropylène glycol (fabriqué par Sartomer Inc. SR508) 3,0 parties
• Solsperse 32000 (fabriqué par Noveon Inc., agent de dispersion) 0,4 partie
• Cromophtal Yellow LA (fabriqué par Ciba Specialty Chemicals, pigment : composant (D) 3,6 parties
• Genorad 16 (fabriqué par Rahn AG, inhibiteur de polymérisation) 0,06 partie
• Rapi-Cure DVE-3 (fabriqué par ISP Europe Ltd., composé éther vinylique) 2,0 parties
• Lucirin TPO (fabriqué par BASF AG, photoinitiateur : composant (C)) 6,5 parties
• Benzophénone (photoinitiateur : composant (C)) 4,0 parties
• Irgacure 184 (fabriqué par Ciba Specialty Chemicals, photoinitiateur : composant (C)) 4,0 parties
• Irgacure 819 (fabriqué par Ciba Specialty Chemicals, photoinitiateur : composant (C)) 2,0 parties
• Isopropylthioxanthone (fabriqué par Ciba Specialty Chemicals, DAROCUR ITX) 1,0 partie
• Byk 307 (fabriqué par BYK Chemie GmbH, agent antimousse) 0,05 partie
Composition (3) :
• Composé amine cyclique spécifique [Composé listé (A-1) : composant (A)] 20,0 parties
• N-vinylcaprolactame 15,0 parties
• Acrylate de 2-phénoxyéthyle (fabriqué par Sartomer Inc. SR339) 26,4 parties
• Triacrylate de triméthylolpropane (fabriqué par Sartomer Inc. SR351) 5,0 parties
• Solsperse 32000 (fabriqué par Noveon Inc., agent de dispersion) 0,4 partie
• Cinquesia Mazenta RT-355D (fabriqué par Ciba Specialty Chemicals, pigment : composant (D) 3,6 parties
• Genorad 16 (fabriqué par Rahn AG, inhibiteur de polymérisation) 0,05 partie
• Rapi-Cure DVE-3 (fabriqué par ISP Europe Ltd., composé éther vinylique) 4,0 parties
• Lucirin TPO (fabriqué par BASF AG, photoinitiateur : composant (C)) 8,5 parties
• Benzophénone (photoinitiateur : composant (C)) 4,0 parties
• Irgacure 184 (fabriqué par Ciba Specialty Chemicals, photoinitiateur : composant (C)) 4,0 parties
• Isopropylthioxanthone (ITX) 1,0 partie
• Byk 307 (fabriqué par BYK Chemie GmbH, agent antimousse) 0,05 partie
Composition (4) :
• Composé amine cyclique spécifique [Composé listé (A-1) : composant (A)] 18,0 parties
• Composé amine cyclique spécifique [Composé listé (A-14) : composant (A)] 4,0 parties
• N-vinylcaprolactame 15,0 parties
• Acrylate de 2-phénoxyéthyle (fabriqué par Sartomer Inc. SR339) 21,4 parties
• Triacrylate de triméthylolpropane (fabriqué par Sartomer Inc. SR351) 3,0 parties
• Diacrylate de dipropylène glycol (fabriqué par Sartomer Inc. SR508) 1,0 partie
• Solsperse 32000 (fabriqué par Noveon Inc., agent de dispersion) 0,4 partie
• Cromophtal Yellow LA (fabriqué par Ciba Specialty Chemicals, pigment : composant (D) 3,6 parties
• Genorad 16 (fabriqué par Rahn AG, inhibiteur de polymérisation) 0,05 partie
• Rapi-Cure DVE-3 (fabriqué par ISP Europe Ltd., composé éther vinylique) 2,0 parties
• Lucirin TPO (fabriqué par BASF AG, photoinitiateur : composant (C)) 8,5 parties
• Benzophénone (photoinitiateur : composant (C) ) 4,0 parties
• Irgacure 184 (fabriqué par Ciba Specialty Chemicals, photoinitiateur : composant (C)) 4,0 parties
• Isopropylthioxanthone (ITX) 1,0 partie
• Byk 307 (fabriqué par BYK Chemie GmbH, agent antimousse) 0,05 partie
Composition (5) :
• Composé amine cyclique spécifique [Composé listé (A-12) : composant (A)] 26,0 parties
• Acrylate de 2-phénoxyéthyle (fabriqué par Sartomer Inc. SR339) 38,4 parties
• Triacrylate de triméthylolpropane (fabriqué par Sartomer Inc. SR351) 2,0 parties
• Diacrylate de dipropylène glycol (fabriqué par Sartomer Inc. SR508) 2,0 parties
• Solsperse 32000 (fabriqué par Noveon Inc., agent de dispersion) 0,4 partie
• Irgalite Blue GLVO [composant (D), fabriqué par Ciba Specialty Chemicals, pigment] 3,6 parties
• Genorad 16 (fabriqué par Rahn AG, inhibiteur de polymérisation) 0,05 partie
• Rapi-Cure DVE-3 (fabriqué par ISP Europe Ltd., composé éther vinylique) 2,0 parties
• Lucirin TPO (fabriqué par BASF AG, photoinitiateur : composant (C)) 8,5 parties
• Benzophénone (photoinitiateur : composant (C) ) 4,0 parties
• Irgacure 184 (fabriqué par Ciba Specialty Chemicals, photoinitiateur : composant (C)) 4,0 parties
• Isopropylthioxanthone (ITX) 1,0 partie
• Byk 307 (fabriqué par BYK Chemie GmbH, agent antimousse) 0,05 partie
dans lesquelles les composés (A-1), (A-12), (A-14), (A-22) et (B-21) sont définis comme suit :

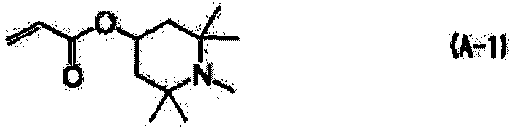

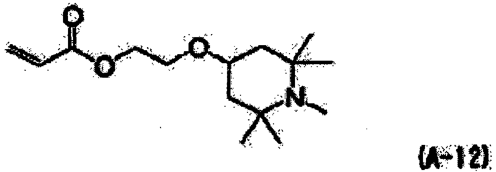

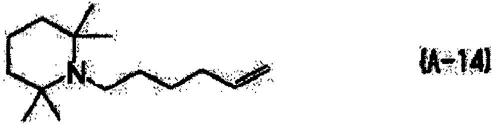

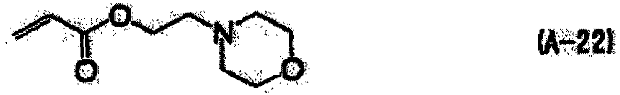

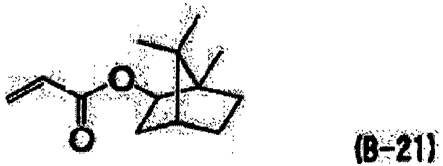

2. Composition d'encre pour enregistrement par jet d'encre selon la revendication 1, dans laquelle (A1) le composé polymérisable ayant, dans une molécule de celui-ci, une liaison insaturée polymérisable et un groupe amino est représenté par la formule (I) suivante : 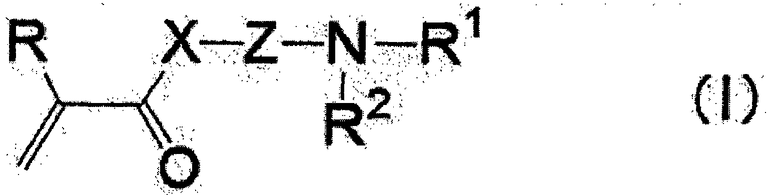 dans laquelle R représente un atome d'hydrogène, X représente un atome d'oxygène, Z représente un groupe organique divalent ou une liaison simple, R¹ et R² représentent chacun indépendamment un groupe alkyle ayant 1 à 8 atomes de carbone, et R¹ et R², R¹ et Z, ou R² et Z peuvent être liés l'un à l'autre pour former une structure cyclique.

3. Composition d'encre pour enregistrement par jet d'encre selon la revendication 1, dans laquelle (A1) le composé polymérisable ayant, dans une molécule de celui-ci, une liaison insaturée polymérisable et un groupe amino a un cycle pyrrolidine, un cycle pipéridine, ou un cycle morpholine.

4. Procédé d'enregistrement par jet d'encre comprenant la projection de la composition d'encre pour enregistrement par jet d'encre selon la revendication 1 sur un support d'enregistrement, et le durcissement de la composition d'encre projetée par irradiation avec un rayonnement actinique.

5. Procédé d'enregistrement par jet d'encre selon la revendication 4, dans lequel (A1) le composé polymérisable ayant, dans une molécule de celui-ci, un groupe acryloyle et un groupe amino est représenté par la formule (I) suivante : 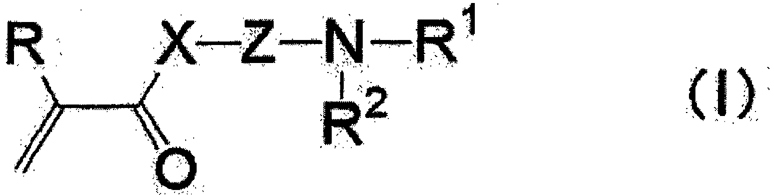 dans laquelle R représente un atome d'hydrogène, X représente un atome d'oxygène, Z représente un groupe organique divalent ou une liaison simple, R¹ et R² représentent chacun indépendamment un groupe alkyle ayant 1 à 8 atomes de carbone, et R¹ et R², R¹ et Z, ou R² et Z peuvent être liés l'un à l'autre pour former une structure cyclique.

6. Procédé d'enregistrement par jet d'encre selon la revendication 4, dans lequel (A1) le composé polymérisable ayant, dans une molécule de celui-ci, un groupe acryloyle et un groupe amino a un cycle pyrrolidine, un cycle pipéridine, ou un cycle morpholine.

7. Composition d'encre pour enregistrement par jet d'encre selon la revendication 1, dans laquelle le rapport de teneurs du monomère monofonctionnel est 97 à 99,5% en masse, et le rapport de teneurs du monomère multifonctionnel est 0,5 à 3% en masse, par rapport à la quantité totale des composés polymérisables contenus dans la composition d'encre.

8. Procédé d'enregistrement par jet d'encre selon la revendication 4, dans lequel le rapport de teneurs du monomère monofonctionnel est 97 à 99,5% en masse, et le rapport de teneurs du monomère multifonctionnel est 0,5 à 3% en masse, par rapport à la quantité totale des composés polymérisables contenus dans la composition d'encre.
